# EUROPEAN PATENT APPLICATION

(11) **EP 4 693 062 A1**
(43) Date of publication of application: **11.02.2026**
(21) Application number: 24838645.0
(22) Date of filing: 02.07.2024
(51) Int. Cl.: G06F 16/242

(54) **INFORMATION SEARCH METHOD, RELATED APPARATUSES, AND COMMUNICATION SYSTEM**

(30) Priority: 12.07.2023 CN 202310859361
(71) Applicant: Huawei Technologies Co., Ltd., Shenzhen, Guangdong 518129 (CN)
(72) Inventor: BIAN, Sucheng, Shenzhen, Guangdong 518129 (CN); ZHANG, Li, Shenzhen, Guangdong 518129 (CN); WANG, Yilun, Shenzhen, Guangdong 518129 (CN); DING, Fei, Shenzhen, Guangdong 518129 (CN); LIU, Cheng, Shenzhen, Guangdong 518129 (CN); YANG, Zheng, Shenzhen, Guangdong 518129 (CN)
(74) Representative: Goddar, Heinz J.
(86) International application number: PCT/CN2024/103020
(87) International publication number: WO 2025/011390

(57) **Abstract**

This application provides an information search method, a related apparatus, and a communication system. An electronic device may find a related file based on semantics of a query statement, extract, from the related file, information to be searched for by the query statement, and provide the information for a user, so that the user can directly obtain, by performing a search operation, information that the user wants to search for. The electronic device may further provide a function control configured to use the foregoing found information, to help the user quickly use the found information. The foregoing method simplifies operations of searching for and obtaining information by the user, and improves efficiency of obtaining information by the user.

## Description

This application claims priority to Chinese Patent Application No. 202310859361.0, filed with the China National Intellectual Property Administration on July 12, 2023, and entitled "INFORMATION SEARCH METHOD, RELATED APPARATUS, AND COMMUNICATION SYSTEM", which is incorporated herein by reference in its entirety.

### TECHNICAL FIELD

This application relates to the field of terminal technologies, and in particular, to an information search method, a related apparatus, and a communication system.

### BACKGROUND

Electronic devices such as mobile phones and tablet computers are increasingly widely used in daily life. A user usually stores a lot of information such as ID card information, bank card information, address information, and a working document locally or in a cloud (such as a cloud disk or a cloud storage space) of an electronic device. When the user needs to use the information, the user usually needs to perform a plurality of operations in the electronic device, perform searching and open a page on which related information is located, and then manually extract required information from the page. The foregoing information obtaining operations are cumbersome, causing poor user experience.

### SUMMARY

This application provides an information search method, a related apparatus, and a communication system. In this method, information that a user wants to search for is extracted from a file for use by the user, which can simplify operations of searching for and obtaining information by the user, and improve efficiency of obtaining information by the user.

According to a first aspect, this application provides an information search method. An electronic device receives a first operation, where the first operation is used to search for first content; the electronic device displays a first search result on a first page in response to the first operation, where the first search result is found based on the first content, and the first search result includes first information extracted from a first file; and the electronic device displays, on the first page, one or more first function controls configured to use the first information, where the one or more first function controls are related to a type of the first information.

The first file may be a file locally stored in the electronic device and/or a file stored in a cloud. The file in the cloud may include a file in a cloud storage space associated with the electronic device. For example, a device account is logged in to the electronic device. The file in the cloud may include a file in a cloud storage space of the device account. For another example, a cloud disk application account is logged in to a cloud disk application of the electronic device. The file in the cloud may include a file in a cloud storage space of the cloud disk application account. Optionally, the file in the cloud may alternatively include web page content (for example, news, a commodity, an address, and a paper) on the internet.

It can be learned from the foregoing method that, when information that a user wants to search for exists in a file, the electronic device may extract, from the file, the information that the user wants to search for, and display one or more function controls on a search result display page for the user to use the information that is searched for and extracted. In this way, the user can obtain, through one search operation, the information that the user wants to search for, and does not need to open a corresponding file after the search and then manually extract, from the file, the information required by the user. The foregoing method simplifies operations of searching for and obtaining information by the user, and improves efficiency of obtaining information by the user.

With reference to the first aspect, in some embodiments, the first operation includes an operation of invoking a first search box in the electronic device and inputting the first content in the first search box; or the first operation includes an operation of selecting and searching for the first content; or the first operation includes an operation of inputting a first symbol at a first location associated with the first content; or the first operation includes an operation on a query control associated with the first content.

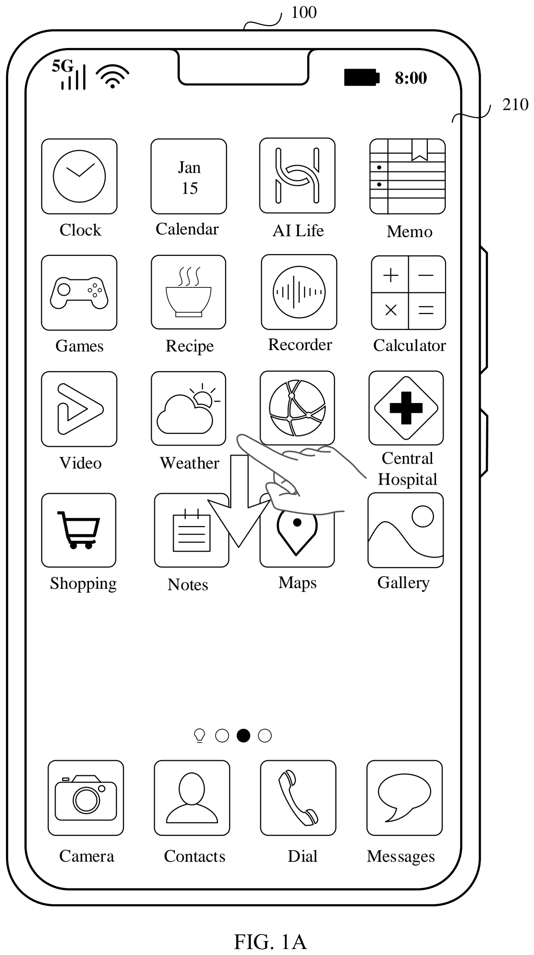

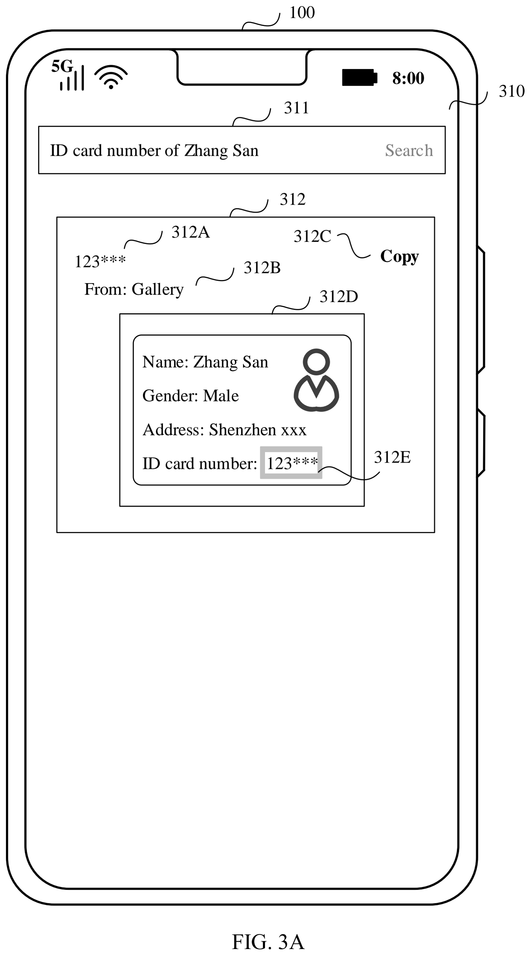

For example, for the operation of invoking the first search box, refer to an operation of sliding down on a desktop shown in FIG. 1A in this application. In this case, the first page may be a page that includes the first search box and that is invoked by the foregoing slide-down operation. The user may input a query statement in the first search box, to instruct the electronic device to search for content that the user wants to search for. For the first search box, refer to a search box 311 shown in FIG. 3A. The first content may be a query statement.

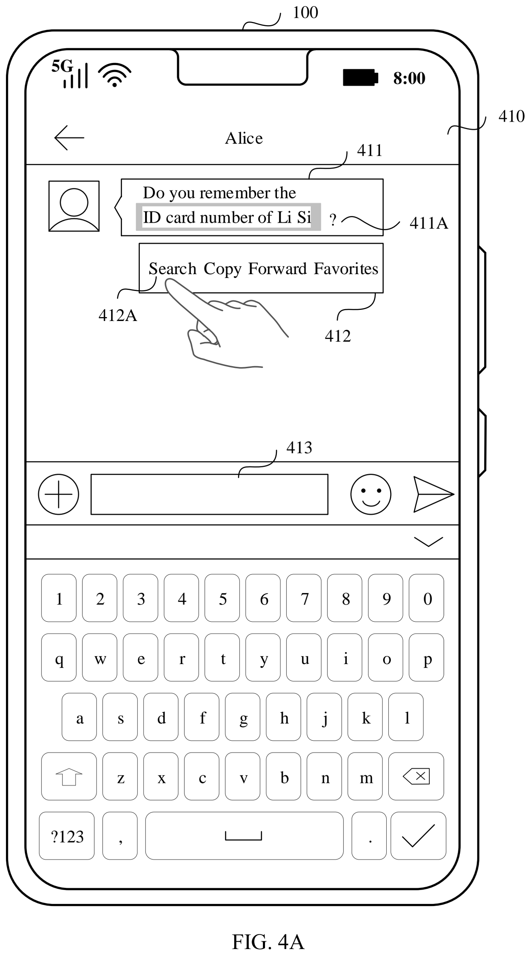

For the operation of selecting and searching for the first content, refer to an operation of selecting a text 411A and tapping a search control 412A shown in FIG. 4A in this application. The text 411A may be the first content (that is, the query statement). The first page may be a display page of the first content.

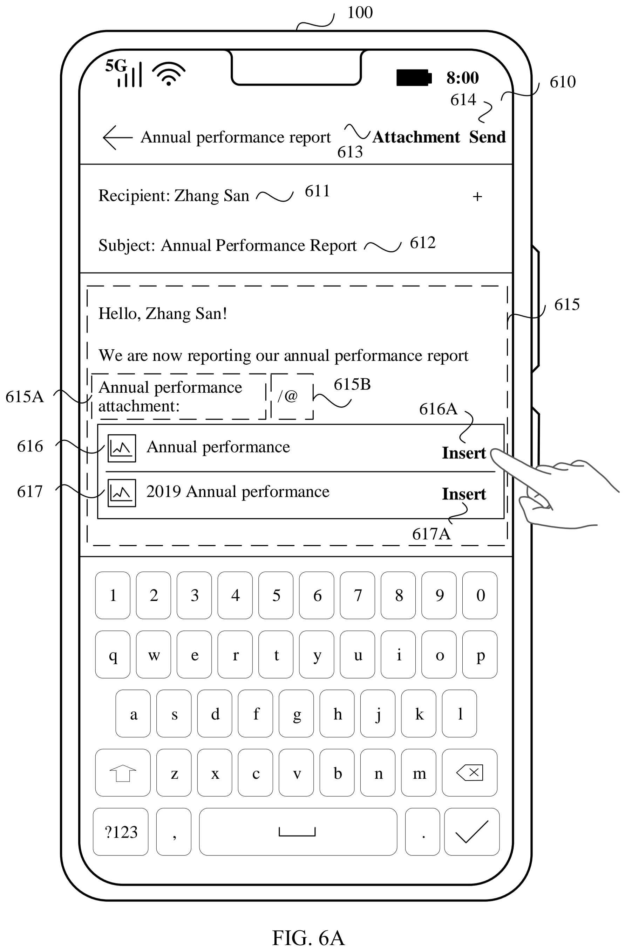

The first location associated with the first content may be, for example, the end of the first content. The first symbol may be a single symbol, for example, "/", "@", or "#". Alternatively, the first symbol may be a combined symbol, for example, "/#" or "@#". For both the first location and the first symbol, refer to a user interface 610 shown in FIG. 6A in this application. The first page may be a display page of the first content.

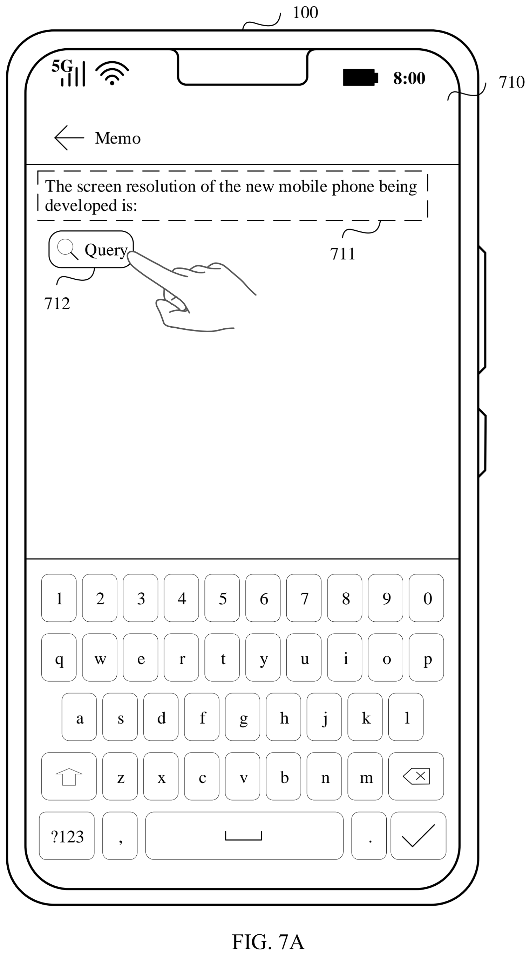

The query control associated with the first content may be, for example, a query control displayed at the end of the first content. Optionally, the query control may be displayed by the electronic device in response to a preset operation. For the query control, refer to a query control 712 shown in FIG. 7A in this application. The first page may be a display page of the first content.

It can be learned that the user can perform a query operation in a plurality of manners. This can help the user quickly search for and obtain, in different scenarios, information required by the user.

With reference to the first aspect, in some embodiments, the first search result further includes one or more of the following: a name of the first file, an application to which the first file belongs, and content of the first information that is included in the first file.

The content of the first information that is included in the first file may be, for example, a paragraph in which the first information is located in the first file. The content of the first information that is included in first file can help the user view a context of the first information in the first file. In this way, the user can more accurately determine whether the first information is information that the user needs to search for.

With reference to the first aspect, in some embodiments, the electronic device further displays a second search result on the first page in response to the first operation, where the second search result is found based on the first content, and the second search result includes second information extracted from a second file; and the electronic device displays, on the first page, one or more second function controls configured to use the second information, where the one or more second function controls are related to a type of the second information.

It can be learned that, when a plurality of search results are found based on a query statement, the electronic device may provide the plurality of search results for the user to use. In addition, the electronic device may further display specific content of sources of the plurality of search results. This can help the user view which of the plurality of search results are required by the user.

With reference to the first aspect, in some embodiments, the one or more first function controls include a first copy control, and the first copy control is configured to copy the first information.

For the first copy control, refer to a copy control 312C shown in FIG. 3A in this application.

With reference to the first aspect, in some embodiments, the type of the first information is a phone number, the one or more first function controls include a dial control, and the dial control is configured to dial a phone number corresponding to the first information; the type of the first information is an address, the one or more first function controls include a navigation control, and the navigation control is configured to navigate to an address corresponding to the first information; or the type of the first information is a bank card number, the one or more first function controls include a transfer control, and the transfer control is configured to perform transfer by using a bank card number corresponding to the first information.

With reference to the first aspect, in some embodiments, the first content is located on the first page, and the one or more first function controls include a first insertion control; and the electronic device receives an operation on the first insertion control, and inserts the first information into the first page.

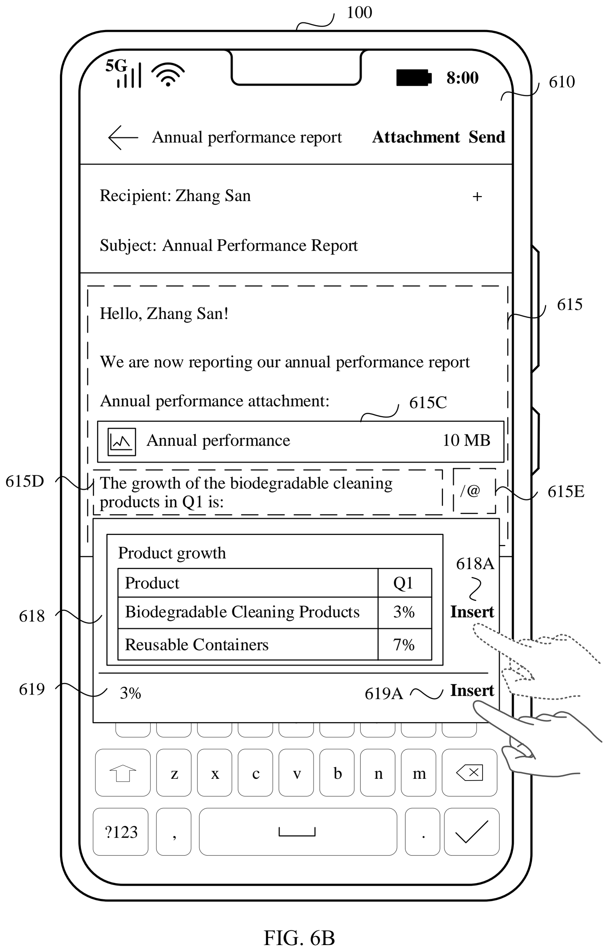

For the first insertion control, refer to an insertion control 618A or an insertion control 619A shown in FIG. 6B in this application.

With reference to the first aspect, in some embodiments, the electronic device receives a second operation, where the second operation is used to search for second content, and the second content is located on a second page; the electronic device displays a third search result on the second page in response to the second operation, where the third search result is found based on the second content, and the third search result includes a first option corresponding to a third file; and the electronic device inserts the third file into the second page in response to an operation on the first option.

The first option may be equivalent to an insertion control configured to insert the third file. For the first option, refer to an insertion control 616A shown in FIG. 6A in this application.

The third file may be inserted into the second page as a link. Alternatively, the third file may be inserted into the second page in another form. A form of inserting the second page into the third file is not limited in embodiments of this application.

It can be learned that, in a text editing scenario, the user may search for, in a text editing process, information (such as text information, image information, or a file) required by the user, and quickly insert the found information into text editing content by using an insertion control. This can improve efficiency of editing a text by the user.

With reference to the first aspect, in some embodiments, the electronic device receives an operation on the inserted first information on the first page, and displays a source of the first information, where the source of the first information includes one or more of the following content: the name of the first file, the application to which the first file belongs, and the content of the first information that is included in the first file.

It can be learned that the first information that is found and that is inserted into the first page may further support user interaction. The user may view the source of the first information by performing an operation of tapping the inserted first information (or another operation on the first information).

With reference to the first aspect, in some embodiments, the electronic device receives a first instruction of a user, where the first instruction instructs to extract information from a fourth file to fill in a third page, and the third page includes a first input box; and the electronic device fills third information in the first input box according to the first instruction, where the third information is information that is extracted from the fourth file and that matches the first input box.

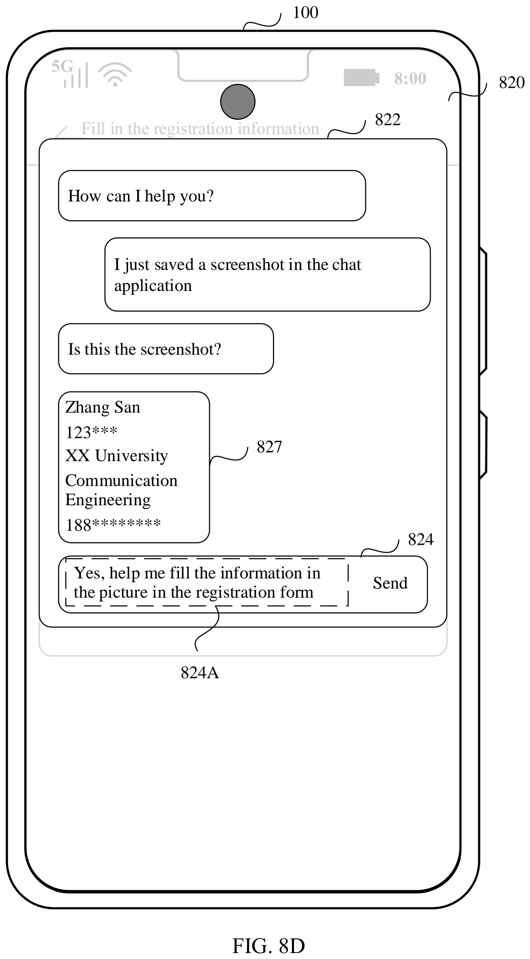

The first instruction may be a voice instruction that is input by the user, or a text instruction that is input by the user in the electronic device. For the first instruction, refer to information 824A shown in FIG. 8D in this application.

The electronic device may use descriptive information of the first input box as a query statement, and search the fourth file for corresponding information based on semantics of the query statement, to fill the found information in the first input box. The descriptive information of the first input box may indicate information about to-be-entered content in the first input box.

Not limited to the first input box, the third page may further include more input boxes. The electronic device may use descriptive information of these input boxes as query statements, and search the fourth file for information that can be filled in the input boxes.

It can be learned that, the point may identify an instruction of the user with reference to an application such as a voice assistant, extract information from a specified file, and fill the information in a target area. In this way, when the information in the specified file needs to be filled in the target area, the user may directly deliver a search and filling instruction to the electronic device without manual copying and pasting. The foregoing method simplifies operations of searching for, obtaining, and filling information by the user, and improves efficiency of obtaining information by the user.

With reference to the first aspect, in some embodiments, before the electronic device displays the first search result, the electronic device determines file content information and file attribute information based on the first content, where the file content information indicates a semantic limitation on information to be searched for by the first content in the first content, and the file attribute information indicates an attribute limitation on the information to be searched for by the first content in the first content; the electronic device determines a first semantic vector of the first content based on the file content information; the electronic device finds one or more files based on the file attribute information, and obtains a semantic vector corresponding to the one or more files, where the one or more files include the first file; the electronic device calculates a similarity between the semantic vector corresponding to the one or more files and the first semantic vector, and selects a second semantic vector corresponding to the first file through screening based on the similarity, where the second semantic vector is a semantic vector with a highest similarity in semantic vectors whose similarities to the first semantic vector are higher than a first threshold; and the electronic device extracts the first information from the first file based on the first content.

It can be learned that the user may input a query statement in the electronic device to quickly query and obtain information that the user wants to query. The electronic device may extract, from a local file and/or a cloud file of the electronic device based on semantics of the query statement for use by the user, information that the user wants to search for. In this way, the user can obtain, through one search operation, the information that the user wants to search for, and does not need to open a corresponding file after the search and then manually extract, from the file, the information required by the user. The foregoing method simplifies operations of searching for and obtaining information by the user, and improves efficiency of obtaining information by the user.

The file content information determined based on the first content may indicate a semantic limitation on the information to be searched for by the first content in the first content. In other words, the file content information may be a condition that limits semantics or a meaning of a search result, and may be used by the electronic device to search for, based on the semantics, the search result required by the query statement. The file attribute information determined based on the first content may indicate an attribute limitation on the information to be searched for by the first content in the first content. Content included in the file attribute information is not limited in embodiments of this application. For example, the file attribute information may include one or more of the following: a creation time, a creation location, a creation user, an app to which a file belongs, a modification time, a quantity of modifications, a file size, and a storage location. In other words, the file content information may be a condition that limits an attribute of a file to which a search result belongs, so that the electronic device can search for, based on the attribute, the file to which the search result required by the query statement belongs, and therefore can extract the search result from the file.

In some embodiments, one file may include a plurality of pieces of content (or referred to as a plurality of data segments). The electronic device may split content in one file, and determine a semantic vector associated with each data segment after the splitting. In this way, one file may be associated with a plurality of semantic vectors. For example, one text file may include a plurality of paragraphs of text. The electronic device may split the text file into paragraphs, and extract, by using the semantic vector extraction model, a semantic vector associated with each paragraph. Alternatively, one text file may include a plurality of chapters. The electronic device may split the text file into chapters, and extract, by using the semantic vector extraction model, a semantic vector associated with each chapter. For another example, one table file may include a plurality of rows of data. The electronic device may split the table file by row, and extract, by using the semantic vector extraction model, a semantic vector associated with each row of data in the table file. For another example, one presentation document may include a plurality of pages of data. The electronic device may split the presentation file by page, and extract, by using the semantic vector extraction model, a semantic vector associated with each page of data in the presentation document.

It may be understood that different paragraphs or different chapters in one text file may express different subjects. For example, in one text file, a first paragraph describes cat species, and a second paragraph describes cat life habits. Different rows of data in one table file may also express different information. For example, in one table file, a first row records sales of product 1, and a second row records sales of product 2. Different pages of content in one presentation document may also express different subjects. For example, in one presentation document, a first page describes a background of a solution, and a second page describes a specific implementation of the solution. After a file is split, a semantic vector of a data segment obtained after the splitting is extracted, so that the electronic device can more accurately find, during information search, information that the user wants to search for.

The first file may correspond to a plurality of semantic vectors. The plurality of semantic vectors may respectively correspond to different data segments (for example, different text paragraphs) in the first file. The plurality of semantic vectors may include a second semantic vector. The second semantic vector may correspond to a data segment 1 in the first file. When determining that the second semantic vector is a semantic vector with a highest similarity in semantic vectors whose similarities to the first semantic vector is higher than the first threshold, the electronic device may extract the first information from the data segment 1 of the first file based on the first content.

In some embodiments, the file content information and the file attribute information may be determined based on the first content by using a language model. The semantic model may be deployed in a cloud server. The electronic device may send the first content to the cloud server. Then, the cloud server may determine the file content information and the file attribute information from the first content by using the language model. The cloud server may send the file content information and the file attribute information to the electronic device. Alternatively, the electronic device may store the language model. When obtaining the first content, the electronic device may determine the file content information and the file attribute information from the first content by using the language model.

In some embodiments, the first information may also be extracted from the first file based on the first content by using the language model.

In some embodiments, the electronic device may find the semantic vectors corresponding to the one or more files in the semantic vector database based on the first semantic vector, and determine the second semantic vector as a semantic vector most similar to the first semantic vector. The semantic vector database may store a semantic vector associated with a local file and/or a cloud file of the electronic device 1. One file may be associated with one or more semantic vectors. The semantic vector database may be established by the electronic device, or may be established by the server. In some embodiments, when a file locally stored in the electronic device changes, or a file stored in a cloud storage space associated with the electronic device changes, the electronic device may update the foregoing semantic vector database. The foregoing file change may include but is not limited to: adding a file, changing content in a file, deleting an existing file, and the like.

According to a second aspect, this application provides an electronic device. The electronic device may include a memory and a processor. The memory may be configured to store a computer program. The processor may be configured to invoke the computer program, so that the electronic device performs the method according to any possible implementation of the first aspect.

According to a third aspect, this application provides a computer-readable storage medium, including instructions. When the instructions are run on an electronic device, the electronic device is enabled to perform the method according to any possible implementation of the first aspect.

According to a fourth aspect, this application provides a computer program product. The computer program product may include computer instructions, and when the computer instructions are run on an electronic device, the electronic device is enabled to perform the method according to any possible implementation of the first aspect.

According to a fifth aspect, this application provides a chip. The chip is used in an electronic device, the chip includes one or more processors, and the processor is configured to invoke computer instructions, so that the electronic device performs the method according to any possible implementation of the first aspect.

It may be understood that the electronic device provided in the second aspect, the computer-readable storage medium provided in the third aspect, the computer program product provided in the fourth aspect, and the chip provided in the fifth aspect are all configured to perform the method provided in the embodiment of this application. Therefore, for beneficial effects that can be achieved by the electronic device, the computer-readable storage medium, the computer program product, and the chip, refer to the beneficial effects in the corresponding method. Details are not described herein again.

### BRIEF DESCRIPTION OF DRAWINGS

FIG. 1A to FIG. 1D are diagrams of some information search scenarios according to an embodiment of this application;
FIG. 2A is a diagram of a hardware structure of an electronic device 100 according to an embodiment of this application;
FIG. 2B is a block diagram of a software structure of an electronic device 100 according to an embodiment of this application;
FIG. 3A to FIG. 3D are diagrams of some information search scenarios according to an embodiment of this application;
FIG. 4A to FIG. 4D are diagrams of some other information search scenarios according to an embodiment of this application;
FIG. 5A to FIG. 5D are diagrams of some other information search scenarios according to an embodiment of this application;
FIG. 6A to FIG. 6C are diagrams of some other information search scenarios according to an embodiment of this application;
FIG. 7A to FIG. 7G are diagrams of some other information search scenarios according to an embodiment of this application;
FIG. 8A to FIG. 8E are diagrams of some other information search scenarios according to an embodiment of this application;
FIG. 9 is a flowchart of a semantic vector database establishment method according to an embodiment of this application;
FIG. 10 is a flowchart of an information search method according to an embodiment of this application; and
FIG. 11 is a diagram of an architecture of a communication system according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. Terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). A term "and/or" is used to describe an association relationship between associated objects and represents that three relationships may exist. For example, A and/or B may represent the following cases: Only A exists, both A and B exist, and only B exists, where A and B may be singular or plural. A character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but not limited to", unless otherwise specifically emphasized in another manner. A term "connection" includes direct connection and indirect connection, unless otherwise specified. Terms "first" and "second" are intended only for description, and shall not be understood as an indication or implication of relative importance or an implicit indication of a quantity of indicated technical features.

In embodiments of this application, a word such as "example" or "for example" indicates an example, an instance, or descriptions. Any embodiment or design scheme described as an "example" or "for example" in embodiments of this application should not be construed as being more preferred or more advantageous than another embodiment or design scheme. Exactly, use of the word such as "example" or "for example" is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in specific computer language such as Java or extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

The following describes an information search scenario provided in this application.

**FIG. 1A to FIG. 1D** **are diagrams of examples of some information search scenarios.**

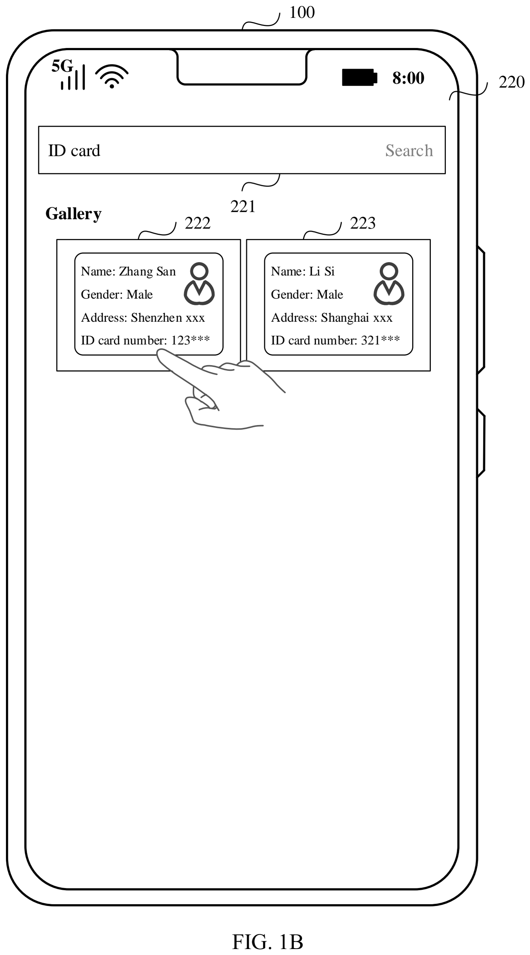

As shown in FIG. 1A, an electronic device 100 may display a user interface 210. The user interface 210 may be a desktop of the electronic device 100, and may display one or more application icons. The application icon may be used to open a corresponding app. In some embodiments, in response to an operation of sliding down on the user interface 210 shown in FIG. 1A, the electronic device 100 may invoke a global search application to display a user interface 220 shown in FIG. 1B. The global search application may be used to search for local content of the electronic device 100. The local content of the electronic device 100 may represent content stored in the electronic device 100. Optionally, the global search application may be further used to search for web page content. Optionally, the global search application may be further used to search for content in a cloud storage space associated with the electronic device 100. An operation manner of invoking the global search application is not limited in embodiments of this application.

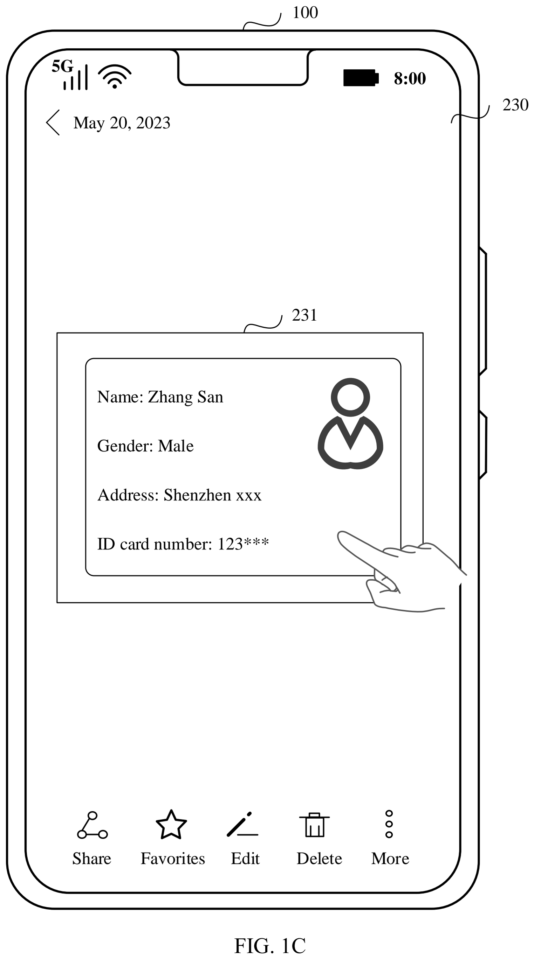

As shown in FIG. 1B, the user interface 220 may include a search box 221. A user may input, in the search box 221, content that the user wants to search for. For example, if the user wants to search for ID card information, the user may input text content "ID card" in the search box 221. The electronic device 100 may perform searching based on the content in the search box 221, and display a search result. Herein, an example in which the electronic device 100 searches a gallery application for a picture related to an ID card is used for description. The electronic device 100 may search for an ID card locally and/or in a cloud. A search result may include a picture 222 and a picture 223 shown in FIG. 1B. Both the picture 222 and the picture 223 are ID card pictures. In response to an operation on the picture 222, for example, a tap operation, the electronic device 100 may display a user interface 230 shown in FIG. 1C.

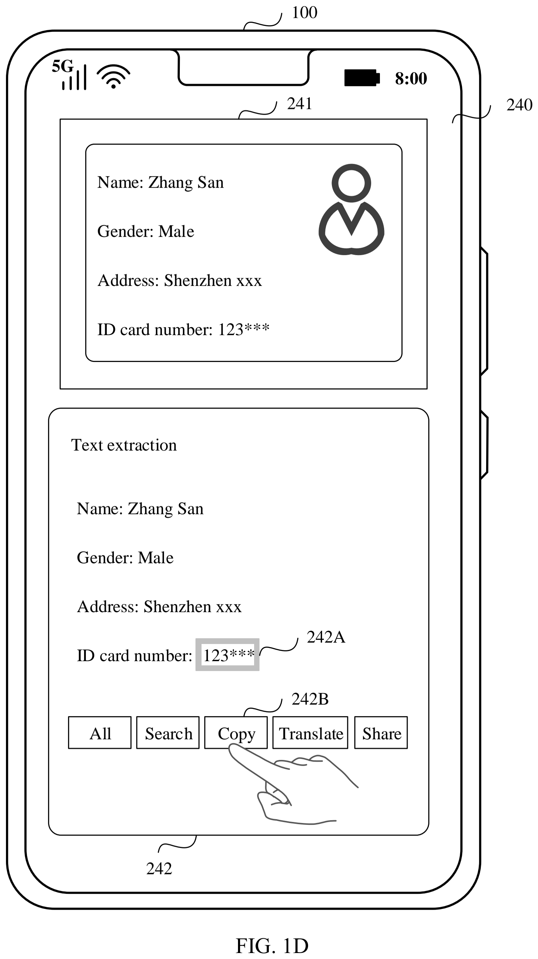

As shown in FIG. 1C, the user interface 230 may be an interface of the gallery application. The user interface 230 may include a picture 231. The picture 231 is the picture 222 shown in FIG. 1B. In some embodiments, in response to an operation on the picture 231, for example, a touch and hold operation, the electronic device 100 may perform text recognition on the picture 231, and display a user interface 240 shown in FIG. 1D. An operation of performing text recognition is not limited in embodiments of this application.

As shown in FIG. 1D, the user interface 240 may include a picture 241 and a text extraction display area 242. The picture 241 is the picture 231 shown in FIG. 1C (that is, the picture 222 shown in FIG. 1B). The text extraction display area 242 may be used to display text content extracted from the picture 241. It can be learned that the text extraction display area 242 may include a name, a gender, an address, and an ID card number on an ID card in the picture 241. The user may select a part or all of the extracted text content. For example, in response to an operation of selecting the ID card number, the electronic device 100 may display a selected identifier 242A shown in FIG. 1D. The selected identifier 242A may indicate that the ID card number "123***" is in a selected state. The text extraction display area 242 may further include a copy control 242B. In response to an operation on the copy control 242B, for example, a tap operation, the electronic device 100 may copy the ID card number indicated by the selected identifier 242A.

It can be learned from the foregoing scenarios shown in FIG. 1A to FIG. 1D that, when the user wants to use an ID card number (for example, send an ID card number of the user to another person), but the electronic device 100 stores an ID card picture, the user needs to first search for the ID card picture, and tap the picture to enter a display interface of the picture in the gallery application. Then, the user performs an operation on the picture in the gallery application to trigger the electronic device 100 to perform text recognition on the picture. Finally, the user selects and copies the ID card number.

It may be understood that the user searches for information to use the found information. However, in the scenarios shown in FIG. 1A to FIG. 1D, after the user performs a search operation, a search result provided by the electronic device 100 for the user is usually not information that can be directly used by the user. In the foregoing scenarios, operations of searching for and obtaining information by the user are cumbersome, making it difficult for the user to quickly obtain information required by the user, and causing poor user experience when the user searches for information.

This application provides an information search method. An electronic device may recognize semantics of a query statement. The query statement may represent content instructing the electronic device to perform searching. The electronic device may find a related file based on the semantics of the query statement, extract, from the related file, information to be searched for by the query statement, and provide the information for a user, so that the user can directly obtain, by performing a search operation, information that the user wants to search for. In some embodiments, the electronic device may further provide, based on a purpose of the foregoing found information, a function control configured to use the information, to help the user quickly use the information that the user searches for. For example, if the foregoing information is address information, the electronic device may provide a navigation control, to help the user navigate to an address corresponding to the address information. For another example, if the foregoing information is a bank card number, the electronic device may provide a transfer control, to help the user perform transfer by using a bank card corresponding to the bank card number.

It can be learned from the foregoing method that, when information that the user wants to search for exists in a file, the electronic device may extract, from the file for the user to use, the information that the user wants to search for. In this way, the user can obtain, through one search operation, the information that the user wants to search for, and does not need to open a corresponding file after the search and then manually extract, from the file, the information required by the user. The foregoing method simplifies operations of searching for and obtaining information by the user, and improves efficiency of obtaining information by the user.

The following describes a structure of the electronic device 100 in this application.

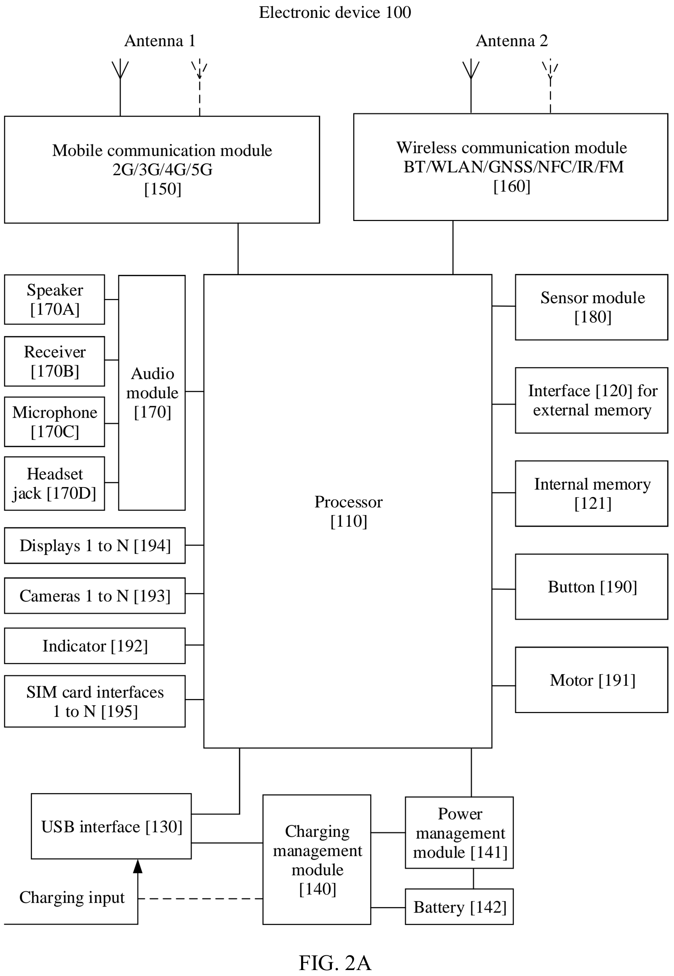

**FIG. 2A** **is a diagram of an example of a hardware structure of the electronic device 100.**

As shown in FIG. 2A, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In this application, the memory may store a computer program, so that the controller or the processor can implement an information search method in this application by using an interface or a protocol.

For example, the computer program stored in the memory may be used to obtain a query statement, determine semantics of the query statement, find a related file locally and/or in a cloud of the electronic device 100 based on the semantics of the query statement, extract, from the related file, information to be queried by the query statement, identify a purpose of the information to be queried by the query statement, and provide a corresponding function control for a user to use the queried information.

The USB interface 130 is an interface that conforms to a USB standard specification, and may be specifically a mini USB interface, a micro USB interface, a USB Type C interface, or the like. The USB interface 130 may be configured to connect to a charger to charge the electronic device 100, may also be configured to perform data transmission between the electronic device 100 and a peripheral device, and may also be configured to connect to a headset for playing an audio through the headset.

The charging management module 140 is configured to receive a charging input from the charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The wireless communication module 160 may provide a solution that is applied to the electronic device 100 and that includes wireless communication such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, or the like.

The ISP is configured to process data fed back by the camera 193. For example, during shooting, a shutter is pressed, light is transferred to a camera photosensitive element through a lens, an optical signal is converted into an electrical signal, and the camera photosensitive element transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, for example, image recognition, facial recognition, speech recognition, text understanding, and text generation.

The interface 120 for external memory may be configured to connect to an external storage card, for example, a micro SD card, to expand a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "horn", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The gyroscope sensor may be configured to determine a motion posture of the electronic device 100. In some embodiments, an angular velocity of the electronic device 100 around three axes (namely, axes x, y, and z) may be determined through the gyroscope sensor. The electronic device 100 may determine an offset angle of the electronic device 100 through the gyroscope sensor.

The acceleration sensor may detect accelerations of the electronic device 100 in various directions (usually on three axes). In some embodiments, the acceleration sensor may be configured to identify a posture of the electronic device 100, and may be used in applications such as switching between a landscape mode and a portrait mode and a pedometer.

The gravity sensor may be configured to determine a tilt angle of the electronic device 100 relative to a horizontal plane. In some embodiments, a screen status of the electronic device 100 may be determined through the gravity sensor, to adjust a screen to keep the screen horizontal.

In some embodiments, the electronic device 100 may determine a moving distance of the electronic device 100 in a period of time through the acceleration sensor and the gravity sensor.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as a call and data communication. In some examples, the electronic device 100 uses eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android^{®} system of a layered architecture is used as an example to describe a software structure of the electronic device 100.

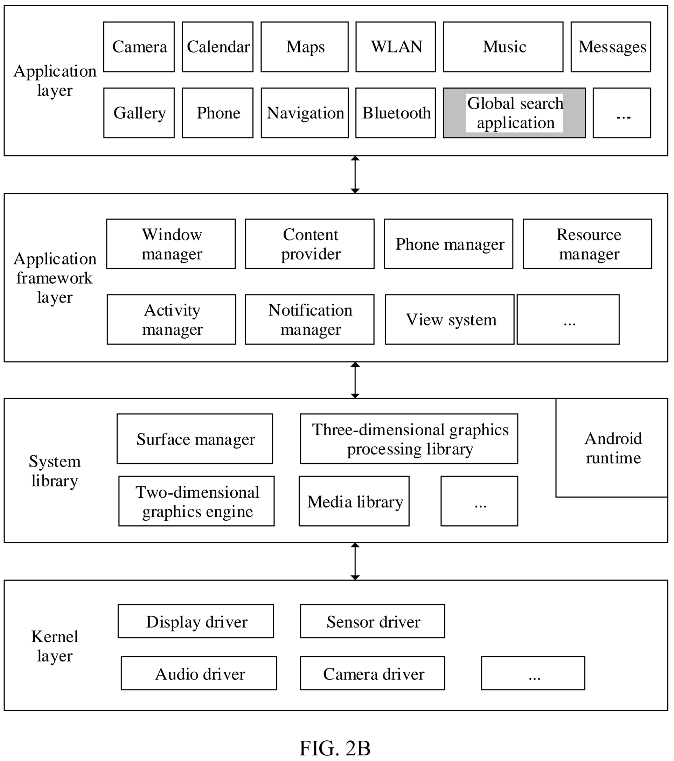

**FIG. 2B** **is a block diagram of an example of the software structure of the electronic device 100.**

In a layered architecture, software is divided into several layers, and each layer has a clear role and task. The layers communicate with each other through a software interface. In some embodiments, the Android^{®} system is divided into four layers: an application layer, an application framework layer, an Android runtime (Android Runtime) and system library, and a kernel layer from top to bottom.

The application layer may include a series of application packages.

As shown in FIG. 2B, the application packages may include applications such as Camera, Gallery, Calendar, Phone, Maps, Navigation, WLAN, Bluetooth, Music, a global search application, and Messages. The global search application may be used to search for local and/or cloud content of the electronic device 100. Searching for the local content of the electronic device 100 may represent searching for content stored in the electronic device 100, for example, a picture in a gallery application, memo information in a memo application, or a document in a file application of the electronic device 100. Searching for the cloud content may include searching for content in a cloud storage space associated with the electronic device 100. For example, a device account is logged in to the electronic device 100. The electronic device 100 may search for a cloud storage space of the device account. For another example, a cloud disk application account is logged in to a cloud disk application of the electronic device 100. The electronic device 100 may search for a cloud storage space of the cloud disk application account. The cloud storage space may also be referred to as a cloud disk, a web disk, or the like. Optionally, searching for the cloud content may further include searching for web page content. The web page content may represent content on the internet, for example, news, a commodity, an address, and a paper on the internet. A name of the global search application is not limited in embodiments of this application. For example, the global search application may also be referred to as a name such as an intelligent search application or a search service.

The application framework layer provides an API and a programming framework for an application at the application layer. The application framework layer includes some predefined functions.

As shown in FIG. 2B, the application framework layer may include a window manager, a content provider, a view system, a phone manager, a resource manager, a notification manager, an activity manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is given, the electronic device vibrates, or the indicator light blinks.

The activity manager is responsible for managing an activity (activity), and is responsible for starting, switching, and scheduling each component in a system, and managing and scheduling an application. The activity manager can be invoked by an upper-layer application to start a corresponding activity.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes some information search scenarios provided in embodiments of this application.

**FIG. 3A to FIG. 3D** **are diagrams of examples of some information search scenarios.**
1. FIG. 3A shows an example of a scenario in which a user searches for an ID card number.

As shown in FIG. 3A, an electronic device 100 may display a user interface 310. The user interface 310 may be displayed in response to the foregoing operation of sliding down on the desktop shown in FIG. 1A. An operation manner of invoking the user interface 310 is not limited in embodiments of this application. The user interface 310 may include a search box 311. The user may input, in the search box 311, content that the user wants to search for. The electronic device 100 may determine the content that is input in the search box 311 as a query statement, and perform searching based on the query statement.

The user may input "ID card number of Zhang San" in the search box 311 to search for an ID card number of a user named Zhang San. The content in the search box 311 is "ID card number of Zhang San". The electronic device 100 may determine that a query statement is "ID card number of Zhang San". The electronic device 100 may perform semantic recognition on the query statement, to search for a file including the ID card number of Zhang San. A specific implementation method for recognizing semantics of a query statement and searching for a file based on the semantics is described in a subsequent embodiment. Details are not described herein.

For example, the electronic device 100 finds an ID card photo including the ID card number of Zhang San. The electronic device 100 may display a search result display box 312 shown in FIG. 3A. The search result display box 312 may include an ID card number 312A, a search information source 312B, a copy control 312C, a picture 312D, and a selected identifier 312E. The picture 312D may be the ID card photo that is found by the electronic device 100 and that includes the ID card number of Zhang San. The ID card number 312A may be extracted from the picture 312D. The selected identifier 312E on the picture 312D may indicate that the ID card number 312A is content indicated by the selected identifier 312E. The search information source 312B may indicate a source of found information (that is, the ID card number 312A). For example, the source may be an app. The search information source 312B is "Gallery" shown in FIG. 3A, indicating that the ID card number 312A is found from the gallery application. Not limited to the app, the source of the foregoing found information may further include a file name, a storage path, and the like. The source of the found information is not limited in embodiments of this application. Optionally, the search result display box 312 may not include the selected identifier 312E.

The copy control 312C may be configured to copy the ID card number 312A. In response to an operation on the copy control 312C, for example, a tap operation, the electronic device 100 may copy the ID card number 312A (that is, the ID card number of Zhang San) to a clipboard. In this way, the user may paste the ID card number of Zhang San at a required location.

It can be learned from FIG. 3A that, when the user wants to use an ID card number, the user may directly obtain and use an ID card number of a target user by searching for the ID card number of the target user. In this way, the user may not need to open a display page of an ID card photo and then manually extract the ID card number from the ID card photo. The foregoing method can help the user quickly obtain information that the user wants to search for, and improve user experience of searching for information.

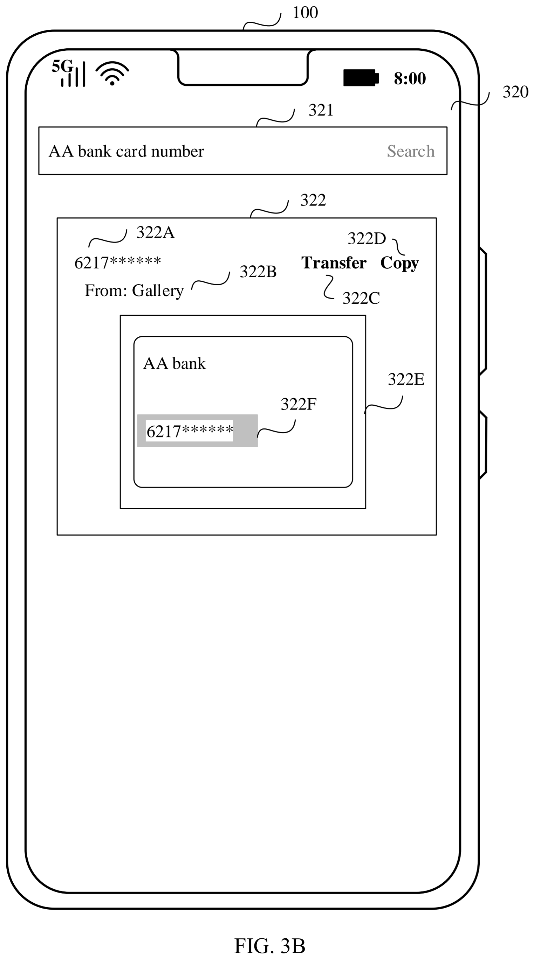

2. FIG. 3B shows an example of a scenario in which a user searches for a bank card number.

As shown in FIG. 3B, an electronic device 100 may display a user interface 320. The user interface 320 may be displayed in response to the foregoing operation of sliding down on the desktop shown in FIG. 1A. An operation manner of invoking the user interface 320 is not limited in embodiments of this application. The user interface 320 may include a search box 321. For the search box 321, refer to the search box 311 shown in FIG. 3A.

The user may input "AA bank card number" in the search box 321 to search for a bank card number of a bank AA. The content in the search box 321 is "AA bank card number". The electronic device 100 may determine that a query statement is "AA bank card number".

For example, the electronic device 100 may find, based on the foregoing query statement, a bank card photo including the AA bank card number. The electronic device 100 may display a search result display box 322 shown in FIG. 3B. The search result display box 322 may include a bank card number 322A, a search information source 322B, a transfer control 322C, a copy control 322D, a picture 322E, and a selected identifier 322F. The picture 322E may be the bank card photo that is found by the electronic device 100 and that includes the AA bank card number. The bank card number 322A may be extracted from the picture 322E. The selected identifier 322F on the picture 322E may indicate that the bank card number 322A is content indicated by the selected identifier 322F. The search information source 322B may indicate a source of found information (that is, the bank card number 322A). For example, the search information source 322B is "Gallery" shown in FIG. 3B, indicating that the bank card number 322A is found from the gallery application.

The transfer control 322C may be configured to open a page for performing transfer by using a bank card corresponding to the bank card number 322A.

The copy control 322D may be configured to copy the bank card number 322A. In response to an operation on the copy control 322D, for example, a tap operation, the electronic device 100 may copy the bank card number 322A (that is, the bank card number of the bank AA) to a clipboard. In this way, the user may paste the bank card number of the bank AA at a required location, for example, send the bank card number to another user.

Not limited to the transfer control 322C and the copy control 322D, the electronic device 100 may further provide more or fewer function controls configured to use the bank card number 322A.

It can be learned from FIG. 3B that, when the user wants to use a bank card number, the user may directly obtain and use a bank card number of a target bank card by searching for the bank card number of the target bank card. In this way, the user may not need to open a display page of a bank card photo and then manually extract the bank card number from the bank card photo. The foregoing method can help the user quickly obtain information that the user wants to search for, and improve user experience of searching for information.

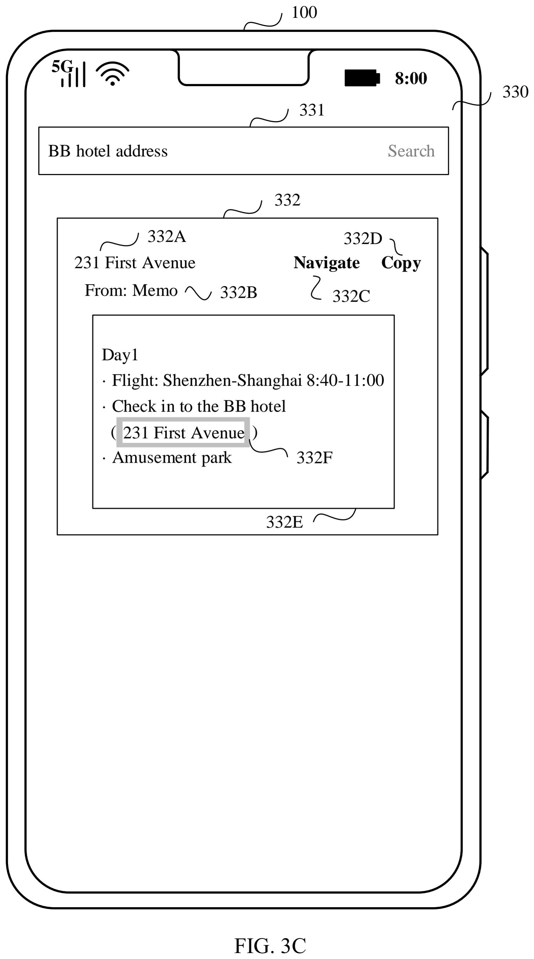

3. FIG. 3C shows an example of a scenario in which a user searches for an address.

As shown in FIG. 3C, an electronic device 100 may display a user interface 330. The user interface 330 may be displayed in response to the foregoing operation of sliding down on the desktop shown in FIG. 1A. An operation manner of invoking the user interface 330 is not limited in embodiments of this application. The user interface 330 may include a search box 331. For the search box 331, refer to the search box 311 shown in FIG. 3A.

The user may input "BB hotel address" in the search box 331 to search for an address of a BB hotel. The content in the search box 331 is "BB hotel address". The electronic device 100 may determine that a query statement is "BB hotel address".

For example, the electronic device 100 may find, based on the foregoing query statement, memo information including the BB hotel address. The electronic device 100 may display a search result display box 332 shown in FIG. 3C. The search result display box 332 may include an address 332A, a search information source 332B, a navigation control 332C, a copy control 332D, a memo display area 332E, and a selected identifier 332F. Memo information that is found by the electronic device 100 and that includes the BB hotel address may be displayed in the memo display area 332E. The address 332A may be extracted from the memo information displayed in the memo display area 332E, and represents the BB hotel address. The selected identifier 332F in the memo display area 332E may indicate that the address 332A is content indicated by the selected identifier 332F. The search information source 332B may indicate a source of found information (that is, the address 332A). For example, the search information source 332B is "Memo" shown in FIG. 3C, indicating that the address 332A is found from the memo application.

The navigation control 332C may be configured to navigate to the address 332A. In response to an operation on the navigation control 332C, the electronic device 100 may open a map application, and navigate from a current location of the electronic device 100 to a location of the address 332A.

The copy control 332D may be configured to copy the address 332A. In response to an operation on the copy control 332D, for example, a tap operation, the electronic device 100 may copy the address 332A(that is, the BB hotel address) to a clipboard. In this way, the user may paste the address of the BB hotel at a required location, for example, send the address of the BB hotel to another user.

Not limited to the navigation control 332C and the copy control 332D, the electronic device 100 may further provide more or fewer function controls configured to use the address 332A.

It can be learned from FIG. 3C that, when the user wants to use address information, the user may directly obtain and use a target address by searching for the target address. In this way, the user may not need to open the memo application to find a memo that records the address information and then manually extract the target address from the memo. The foregoing method can help the user quickly obtain information that the user wants to search for, and improve user experience of searching for information.

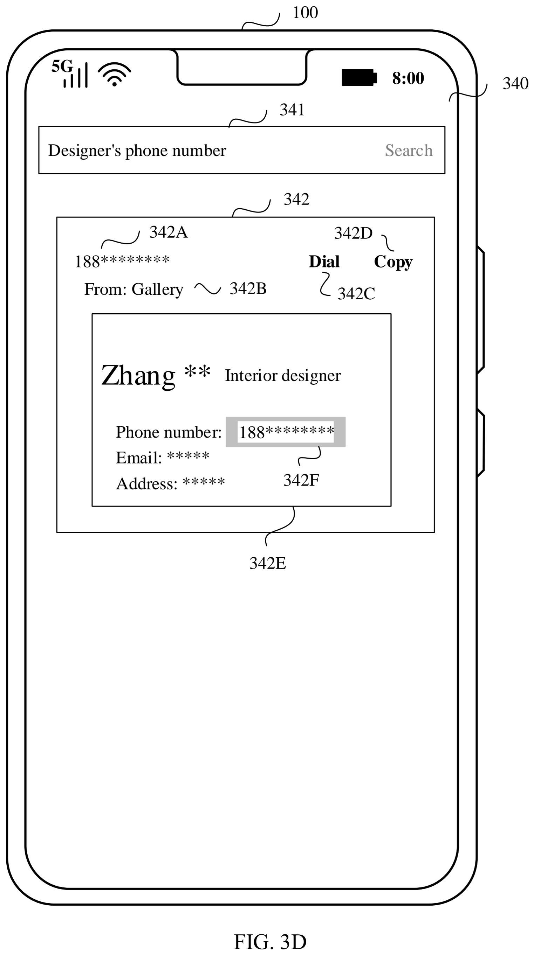

4. FIG. 3D shows an example of a scenario in which a user searches for a phone number.

As shown in FIG. 3D, an electronic device 100 may display a user interface 340. The user interface 340 may be displayed in response to the foregoing operation of sliding down on the desktop shown in FIG. 1A. An operation manner of invoking the user interface 340 is not limited in embodiments of this application. The user interface 340 may include a search box 341. For the search box 341, refer to the search box 311 shown in FIG. 3A.

The user may input "Designer's phone number" in the search box 341 to search for a designer's phone number. The content in the search box 341 is "Designer's phone number". The electronic device 100 may determine that a query statement is "Designer's phone number".

For example, the electronic device 100 may find, based on the foregoing query statement, a designer business card photo including the designer's phone number. The electronic device 100 may display a search result display box 342 shown in FIG. 3D. The search result display box 342 may include a phone number 342A, a search information source 342B, a dial control 342C, a copy control 342D, a picture 342E, and a selected identifier 342F. The picture 342E may be the designer business card photo that is found by the electronic device 100 and that includes the designer's phone number. The phone number 342A may be extracted from the picture 342E, for example, a phone number of a designer named "Zhang **". The selected identifier 342F on the picture 342E may indicate that the phone number 342A is content indicated by the selected identifier 342F. The search information source 342B may indicate a source of found information (that is, the phone number 342A). For example, the search information source 342B is "Gallery" shown in FIG. 3D, indicating that the phone number 342A is found from the gallery application.

The dial control 342C may be configured to dial the phone number 342A. In response to an operation on the dial control 342C, the electronic device 100 may open a dial application to dial the phone number 342A.

The copy control 342D may be configured to copy the phone number 342A. In response to an operation on the copy control 342D, for example, a tap operation, the electronic device 100 may copy the phone number 342A (that is, the phone number of the designer Zhang **) to a clipboard. In this way, the user may paste the phone number 342A at a required location, for example, send the phone number 342A to another user.

Not limited to the dial control 342C and the copy control 342D, the electronic device 100 may further provide more or fewer function controls configured to use the phone number 342A.

It can be learned from FIG. 3D that, when the user wants to use a phone number of a target user, the user may directly obtain and use the phone number of the target user by searching for the phone number of the target user. In this way, the user may not need to open a display page of the designer business card photo and then manually extract the designer's phone number from the designer business card photo. The foregoing method can help the user quickly obtain information that the user wants to search for, and improve user experience of searching for information.

It should be noted that the content that is input in the search boxes shown in FIG. 3A to FIG. 3D is merely an example for description of this application, and should not constitute a limitation on this application.

The search boxes shown in FIG. 3A to FIG. 3D may be search boxes provided by a global search application. In some embodiments, the search box provided by the global search application may be further displayed on a leftmost screen. To be specific, the electronic device 100 may determine content that is input in a search box of the leftmost screen as a query statement, and provide found information and one or more function controls configured to use the information for the user by using an information search method in this application.

It can be learned from the scenarios shown in FIG. 3A to FIG. 3D that the electronic device 100 may search for, locally and/or in a cloud of the electronic device 100 based on a query statement that is input by the user in the search box provided by the global search application, information to be searched for by the query statement. The electronic device 100 may provide the user with the information to be searched for by the query statement, and provide a function control configured to use the foregoing information. This can help the user quickly obtain information that the user wants to search for, and improve user experience of searching for information.

**FIG. 4A to FIG. 4D** **are diagrams of examples of some other information search scenarios.**

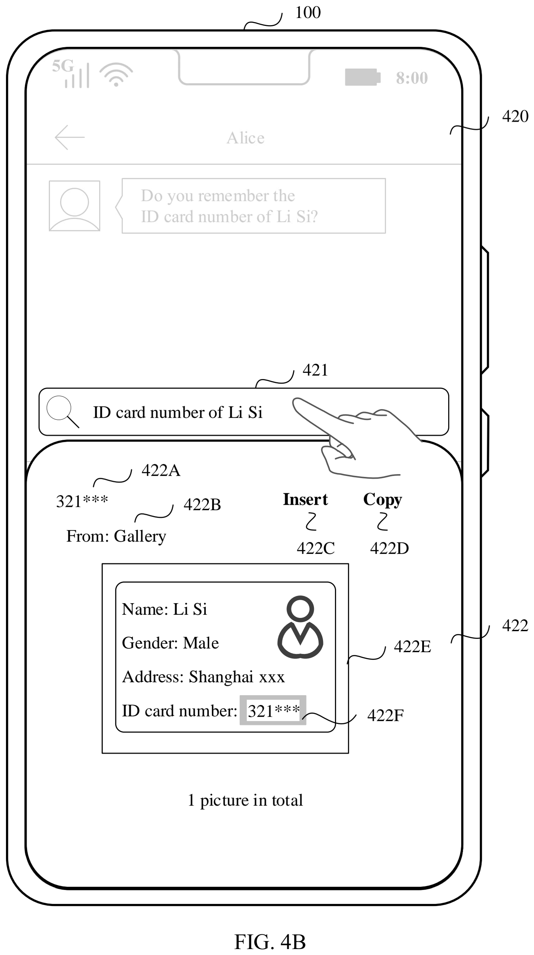

As shown in FIG. 4A, an electronic device 100 may display a user interface 410. The user interface 410 may be a chat interface of an instant messaging application. The user interface 410 may include a chat record 411 and an input box 413. The input box 413 may be used to input chat content. For example, content of the chat record 411 may be "Do you remember the ID card number of Li Si?" In response to an operation of selecting a text 411A in the chat record 411, the electronic device 100 may display an option box 412 shown in FIG. 4A. Content of the text 411A may be "ID card number of Li Si". The option box 412 may include a search control 412A. In response to an operation on the search control 412A shown in FIG. 4A, for example, a tap operation, the electronic device 100 may display a user interface 420 shown in FIG. 4B.

As shown in FIG. 4B, the user interface 420 may include a search box 421 and a search result display area 422. The search box 421 may be provided by a global search application. The selected text 411A shown in FIG. 4A may be displayed in the search box 421. The electronic device 100 may perform searching by using the text 411A as a query statement. The search result display area 422 may be used to display a search result. For example, content found by the electronic device 100 based on the text 411A may include an ID card photo including the ID card number of Li Si. The electronic device 100 may display an ID card number 422A, a search information source 422B, an insertion control 422C, a copy control 422D, a picture 422E, and a selected identifier 422F shown in FIG. 4B in the search result display area 422. The picture 422E may be the ID card photo that is found by the electronic device 100 and that includes the ID card number of Li Si. The ID card number 422A may be extracted from the picture 422E. The selected identifier 422F on the picture 422E may indicate that the ID card number 422A is selected and extracted from the picture 422E. The search information source 422B may indicate a source of found information (that is, the ID card number 422A). For example, the search information source 422B is "Gallery" shown in FIG. 4B, indicating that the ID card number 422A is found from the gallery application.

The insertion control 422C may be configured to input the ID card number 422A in the input box 413 shown in FIG. 4A.

The copy control 422D may be configured to copy the ID card number 422A.

In some embodiments, in response to selecting all of the text in the chat record 411 (that is, "Do you remember the ID card number of Li Si?"), the electronic device 100 may also display the option box 412 shown in FIG. 4A. Further, in response to an operation on the search control 412A, the electronic device 100 may perform searching by using the foregoing selected file "Do you remember the ID card number of Li Si?" as a query statement. The electronic device 100 may still obtain the search result shown in FIG. 4B.

In some embodiments, a user may also modify the content in the search box 421 to replace the content that needs to be searched for.

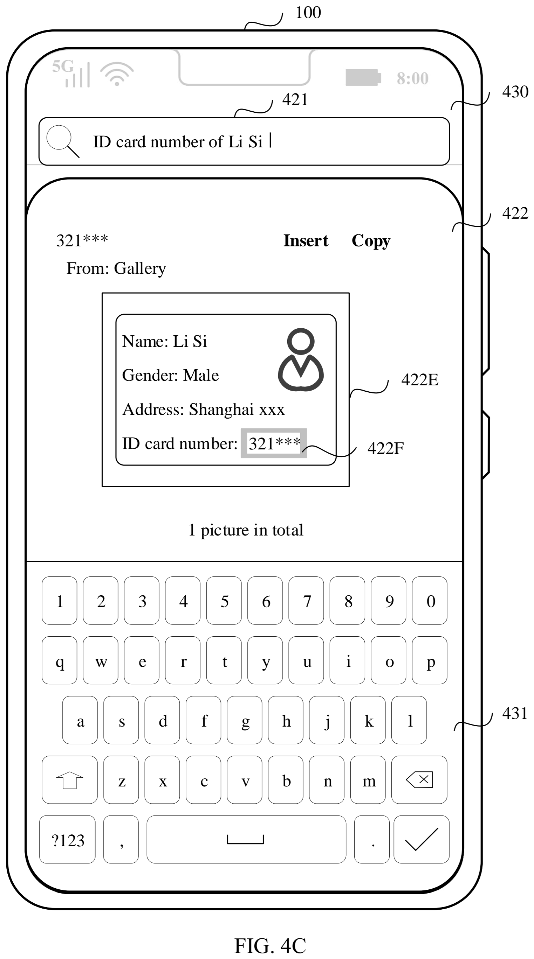

In response to an operation on the search box 421 shown in FIG. 4B, for example, a tap operation, the electronic device 100 may display a user interface 430 shown in FIG. 4C. The user interface 530 may include a search box 421, a search result display area 422, and an input keyboard 431. For the search box 421 and the search result display area 422, refer to the descriptions in the foregoing embodiment. The input keyboard 431 is configured to input text content. For example, the user may input, in the search box 421 by using the input keyboard 431, content to be searched for.

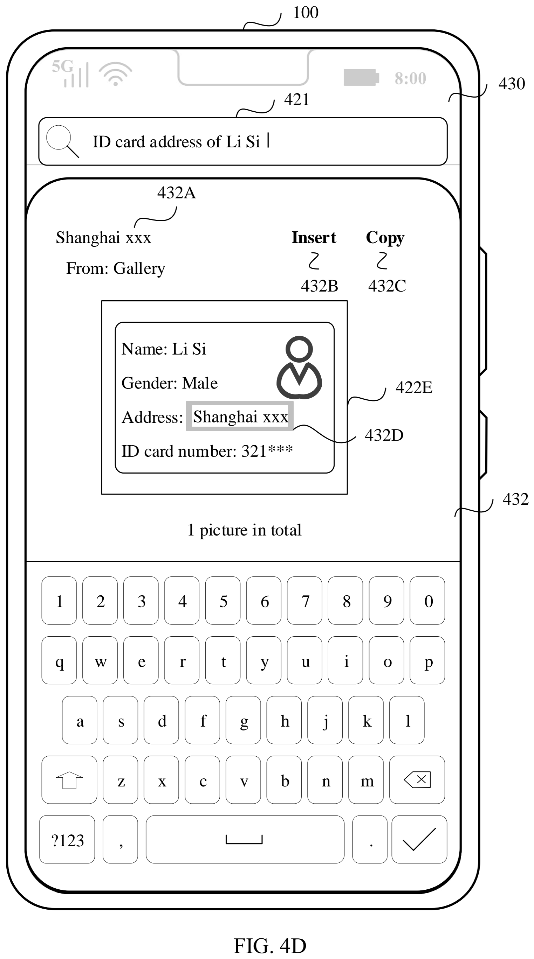

For example, as shown in FIG. 4D, the user modifies the content in the input box 421 from "ID card number of Li Si" shown in FIG. 4C to "ID card address of Li Si" shown in FIG. 4D. The electronic device 100 may perform searching by using the content "ID card address of Li Si" in the search box 421 shown in FIG. 4D as a query statement, and display a search result display area 432 shown in FIG. 4D. The search result display area 432 may include an address 432A, an insertion control 432B, a copy control 432C, a picture 422E, and a selected identifier 432D. The picture 422E may be the ID card photo that is found by the electronic device 100 and that includes the ID card address of Li Si. The address 432A may be the ID card address of Li Si that is extracted from the picture 422E. The selected identifier 432D on the picture 422E may indicate that the address 432A is selected and extracted from the picture 422E. The insertion control 432B may be configured to input the address 432A in the input box 413 shown in FIG. 4A. The copy control 432C may be used for the address 432A.

Not limited to modifying the content in the search box 421 to "ID card address of Li Si", the user may further input, in the search box 421, other content to be searched for, for example, a bank card number, a phone number, or content in a target document.

It can be learned from the scenarios shown in FIG. 4A to FIG. 4D that an information search capability provided by the foregoing global search application may be further invoked by another app. The user may select corresponding content in one or more apps for searching, and quickly obtain, by using the information search capability provided by the foregoing global search application, information that the user wants to search for. The electronic device 100 may respond to an operation of selecting a segment of content by the user for searching, use the selected content as a query statement, and search for, locally and/or in a cloud of the electronic device 100, information to be searched for by the query statement. The electronic device 100 may provide the user with the information to be searched for by the query statement, and provide a function control configured to use the foregoing information. In other words, in addition to invoking the search box of the global search application and inputting the query statement in the search box, the user may further select existing content and use the existing content as a query statement for searching, and does not need to manually input the foregoing existing content in the search box. This can simplify an operation of searching for information by the user, and improve user experience of searching for information.

In addition, after selecting the existing content for searching, the user may further modify the query statement used for searching, so as to more accurately search for content that the user wants to search for or modify content that the user wants to search for.

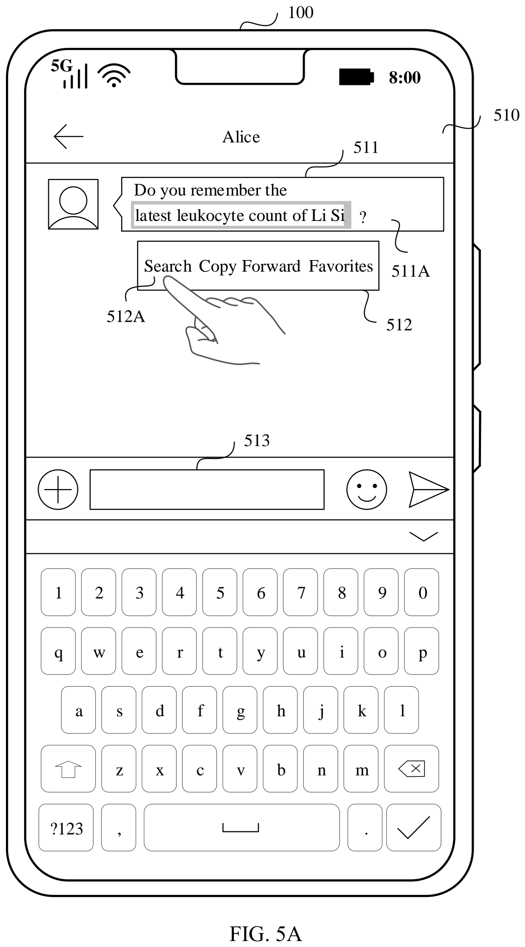

**FIG. 5A to FIG. 5D** **are diagrams of examples of some other information search scenarios.**

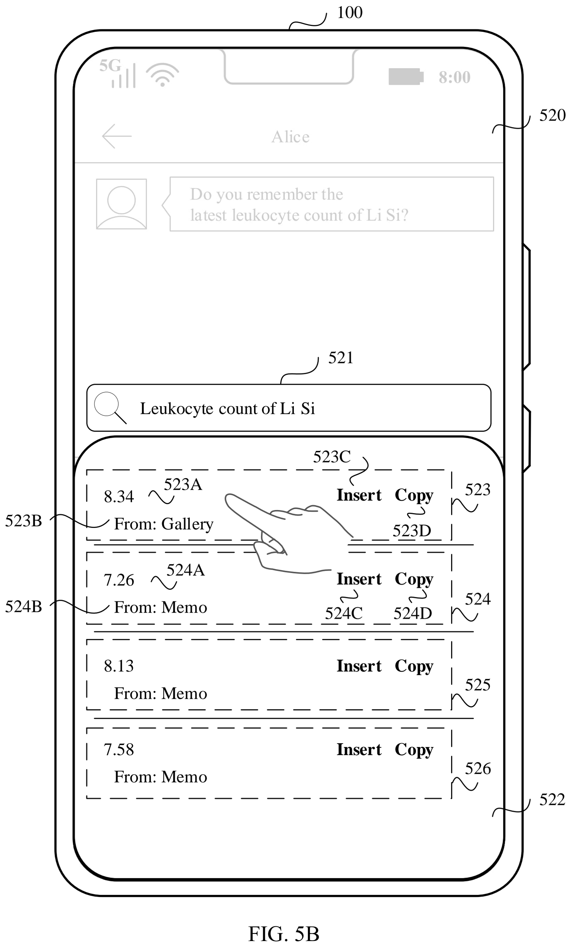

As shown in FIG. 5A, an electronic device 100 may display a user interface 510. The user interface 510 may be a chat interface of an instant messaging application. The user interface 510 may include a chat record 511 and an input box 513. The input box 513 may be used to input chat content. For example, content of the chat record 511 may be "Do you remember the latest leukocyte count of Li Si?" In response to an operation of selecting a text 511A in the chat record 511, the electronic device 100 may display an option box 512 shown in FIG. 5A. Content of the text 511A may be "leukocyte count of Li Si". The option box 512 may include a search control 512A. In response to an operation on the search control 512A shown in FIG. 5A, for example, a tap operation, the electronic device 100 may display a user interface 520 shown in FIG. 5B.

As shown in FIG. 5B, the user interface 520 may include a search box 521 and a search result display area 522. The search box 521 may be provided by a global search application. The selected text 511A shown in FIG. 5A may be displayed in the search box 521. The electronic device 100 may perform searching by using the text 511A as a query statement. The search result display area 522 may be used to display a search result.

For example, content found by the electronic device 100 based on the text 511A may include a medical examination report photo including the leukocyte count of Li Si, and memo information including the leukocyte count of Li Si. The electronic device 100 may display a search result 523 to a search result 526 shown in FIG. 5B in the search result display area 522 based on the foregoing found content.

The search result 523 may include a leukocyte count 523A, a search result source 523B, an insertion control 523C, and a copy control 523D. The leukocyte count 523A may indicate the leukocyte count of Li Si that is found by the electronic device 100. The search result source 523B may indicate a source of the leukocyte count 523A. For example, the search result source 523B is "Gallery" shown in FIG. 5B, indicating that the leukocyte count 523A is found from the gallery application. The insertion control 523C may be configured to input the leukocyte count 523A in the input box 513 shown in FIG. 5A. The copy control 523D may be configured to copy the leukocyte count 523A.

The search result 524 may include a leukocyte count 524A, a search result source 524B, an insertion control 524C, and a copy control 524D. The leukocyte count 524A may indicate the leukocyte count of Li Si that is found by the electronic device 100. The search result source 524B may indicate a source of the leukocyte count 524A. For example, the search result source 524B is "Memo" shown in FIG. 5B, indicating that the leukocyte count 524A is found from the memo application. The insertion control 524C may be configured to input the leukocyte count 524A in the input box 513 shown in FIG. 5A. The copy control 524D may be configured to copy the leukocyte count 524A.

For both the search result 525 and the search result 526, refer to the foregoing descriptions of the search result 524. It can be learned that both the leukocyte counts in the search result 525 and the search result 526 are found by the electronic device 100 from the memo application. In some embodiments, the search result 524 to the search result 526 may be respectively found by the electronic device 100 from different memo documents in the memo application. For example, a plurality of memo documents in the memo application record the leukocyte count of Li Si. The electronic device 100 may query the plurality of memo documents based on the foregoing query statement, and extract the leukocyte count of Li Si from the plurality of memo documents for use (for example, insertion or copying) by a user.

In some embodiments, the user may query specific content of a source of each of the foregoing search results.

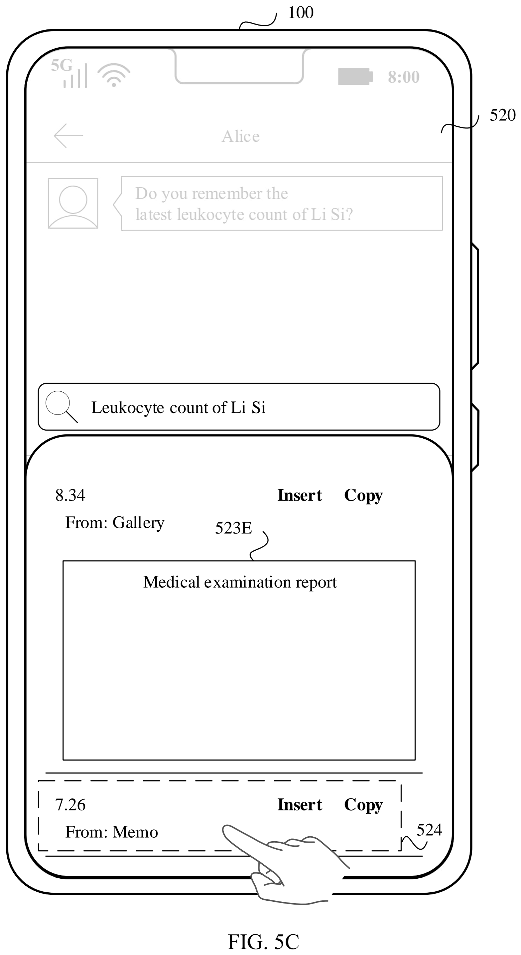

For example, in response to an operation on the search result 523 shown in FIG. 5B, for example, a tap operation, the electronic device 100 may display a picture 523E shown in FIG. 5C. The picture 523E may be the medical examination report photo that is found by the electronic device 100 and that includes the leukocyte count of Li Si. This can help the user view specific content in the medical examination report photo. It can be learned that the user may expand specific content of the search result 523 by tapping the search result 523. Because the search result 523 is displayed in an expanded manner, a display location of a search result (for example, the search result 524) displayed after the search result 523 may be moved down. In some embodiments, in response to an operation of sliding up or down in the search result display area 522, the electronic device 100 may display, on a screen, a search result hidden in the search result display area 522. For example, in response to an operation of sliding up in the search result display area 522 shown in FIG. 5C, the electronic device 100 may move up the search result 524 and the specific content expanded in the search result 523, to display other search results (for example, the search result 525 and the search result 526 shown in FIG. 5B) after the search result 524.

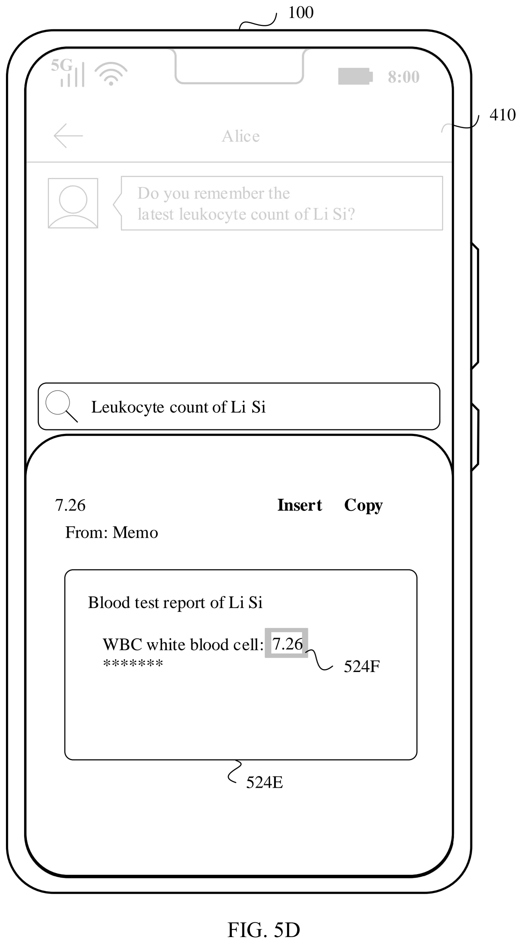

For another example, in response to an operation on the search result 524 shown in FIG. 5C, for example, a tap operation, the electronic device 100 may display a memo display area 524E shown in FIG. 5D. Memo information that is found by the electronic device 100 and that includes the leukocyte count of Li Si may be displayed in the memo display area 524E. The leukocyte count 524A shown in FIG. 5B may be extracted from the memo information displayed in the memo display area 524E shown in FIG. 5D. A selected identifier 524F in the memo display area 524E may indicate that the leukocyte count 524A shown in FIG. 5B is content indicated by the selected identifier 524F. This can help the user view specific content of the memo information including the leukocyte count of Li Si.

It can be learned from the scenarios shown in FIG. 5A to FIG. 5D that, when a plurality of search results are found based on a query statement, the electronic device 100 may provide the plurality of search results for the user to use. In addition, the electronic device 100 may further display specific content of sources of the plurality of search results. This can help the user view which of the plurality of search results are required by the user.

**FIG. 6A to FIG. 6C** **are diagrams of examples of some other information search scenarios.**

As shown in FIG. 6A, an electronic device 100 may display a user interface 610. The user interface 610 may be an interface for sending an email in an email application. The user interface 610 may include recipient information 611, an email subject 612, an attachment adding control 613, a sending control 614, and an email body display area 615. The recipient information 611 may indicate information such as a name and an email address of a recipient. The email subject 612 may indicate a subject of a to-be-sent email. The attachment adding control 613 may be configured to add an attachment to the to-be-sent email. The sending control 614 may be configured to send the email. The email body display area 615 may display a body content of the to-be-sent email.

For example, the email body display area 615 may include a text 615A. Content of the text 615A may be "Annual performance attachment:". After inputting the text 615A, a user continues to input a preset symbol 615B in the email body display area 615. The preset symbol 615B may be, for example, "/@". When the preset symbol 615B is detected in an area used to input content such as a text, the electronic device 100 may determine, as a query statement for searching, a part or all of a text that is input before the preset symbol 615B. In a possible implementation, the electronic device 100 may determine one or more sentence texts before the preset symbol 615B as a query statement. For example, the electronic device 100 may divide each sentence of text based on a symbol such as a Chinese period "∘" or an English period ".". Optionally, the electronic device 100 may determine one or more paragraphs of text before the preset symbol 615B as a query statement. For example, the electronic device 100 may divide a text into paragraphs based on a line break. Alternatively, the electronic device 100 may determine, as a query statement, entire document content of a page on which the preset symbol 615B is located. An implementation in which the electronic device 100 determines a query statement after identifying the preset symbol 615B is not limited in embodiments of this application.

Herein, an example in which the electronic device 100 determines, as a query statement, the text 615A that is input before the preset symbol 615B is used for description. The electronic device 100 performs searching based on the text 615A, where found content may include a file recording annual performance. As shown in FIG. 6A, the electronic device 100 may display a search result 616 and a search result 617 based on the found content. The search result 616 may indicate a file named "Annual performance". The search result 617 may indicate a file named "2019 Annual performance". It can be learned that, although the query statement is "annual performance attachment", the electronic device 100 performs searching based on semantics of the query statement, and may find search results that are related to the semantics of the query statement but that are expressed by using a same word or different words. The search result 616 may include an insertion control 616A. The insertion control 616A may be configured to add the file named "Annual performance" to the to-be-sent email as an attachment. Similarly, the search result 617 may include an insertion control 617A. The insertion control 617A may be configured to add the file named "2019 Annual performance" to the to-be-sent email as an attachment. In response to an operation on the insertion control 616A shown in FIG. 6A, for example, a tap operation, the electronic device 100 may display a user interface 610 shown in FIG. 6B.

As shown in FIG. 6B, when the electronic device 100 adds the file named "Annual performance" to the to-be-sent email, the electronic device 100 may display a file identifier 615C in the email body display area 615. The file identifier 615C may indicate that the file named "Annual performance" has been added to the to-be-sent email. In some embodiments, in response to an operation on the file identifier 615C, for example, a tap operation, the electronic device 100 may open the file named "Annual performance". In addition, when the foregoing file is added to the to-be-sent email, the electronic device 100 may cancel display of the preset symbol 615B shown in FIG. 6A and the search results (for example, the search result 616 and the search result 617) found based on the query statement.

Further, after adding the file named "Annual performance" to the email, the user may continue to input a text 615D in the email body display area 615. Content of the text 615D may be "The growth of the biodegradable cleaning products in Q1 is:". The user continues to input a preset symbol 615E after the text 615D. For the preset symbol, refer to the preset symbol 615B shown in FIG. 6A. The electronic device 100 may determine, as a query statement for searching, the text 615D that is input before the preset symbol 615E. Content found by the electronic device 100 may include a value of the growth of the biodegradable cleaning products in Q1.

As shown in FIG. 6B, the electronic device 100 may display a search result 618 and a search result 619 based on the found content. The search result 618 may indicate preview content of the growth of the biodegradable cleaning products in Q1 in the found file. The search result 618 may include an insertion control 618A. The insertion control 618A may be configured to insert the preview content indicated by the search result 618 into the email body display area 615. The search result 619 may indicate the value (for example, 3%) of the growth of the biodegradable cleaning products in Q1. The search result 619 may include an insertion control 619A. The insertion control 619A may be configured to insert the value indicated by the search result 619 into the email body display area 615. Optionally, the electronic device 100 may further display sources of the search result 618 and the search result 619. For example, the sources of the search result 618 and the search result 619 may be the file named "Annual performance".

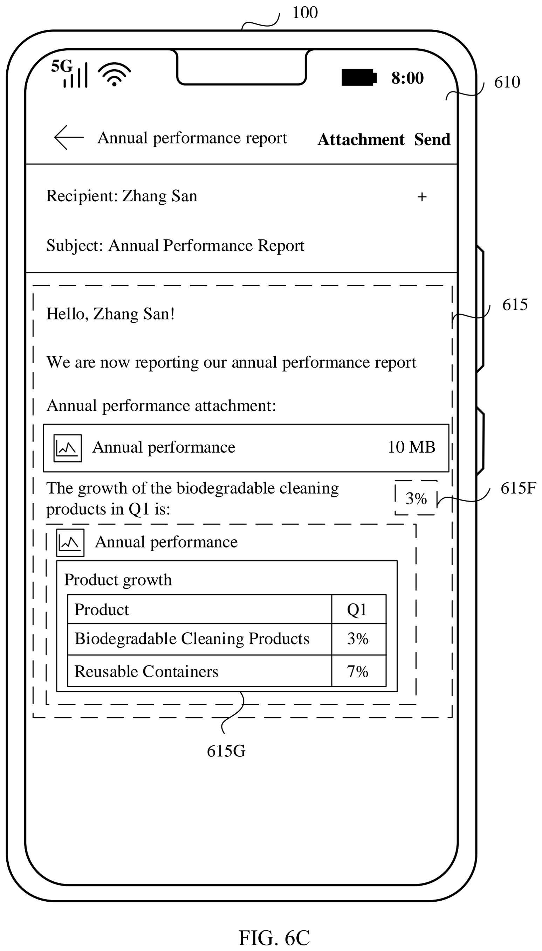

In response to operations on the insertion control 618A and the insertion control 619A shown in FIG. 6B, the electronic device 100 may display a user interface 610 shown in FIG. 6C.

As shown in FIG. 6C, when the electronic device 100 inserts the content indicated by the search result 618 and the search result 619 into the to-be-sent email, the electronic device 100 may display a text 615F and a table 615G in the email body display area 615. The text 615F may be the value of the growth, indicated by the search result 619, of the biodegradable cleaning products in Q1. The table 615G may be the preview content, indicated by the search result 618, of the growth of the biodegradable cleaning products in Q1 in the file. An identifier "Annual performance" in the table 615G may indicate that content of the table 615G comes from the file named "Annual performance". In some embodiments, in response to an operation on the table 615G, for example, a double-tap operation, the electronic device 100 may open the file named "Annual performance" for the user to view and edit. In addition, when the text 615F and the table 615G are added to the to-be-sent email, the electronic device 100 may cancel display of the preset symbol 615E shown in FIG. 6B and the search results (for example, the search result 618 and the search result 619) found based on the query statement.

The preset symbol "/@" shown in FIG. 6A and FIG. 6B is merely an example for description of this application, and should not constitute a limitation on this application. The preset symbol may alternatively be other content. The preset symbol may be a single symbol, for example, "/", "@", or "#". The preset symbol may alternatively be a combined symbol, for example, "/#" or "@#". Not limited to the foregoing preset symbol, when detecting another preset operation, the electronic device 100 may also determine a query statement for searching. For example, the preset operation may be an operation on a preset shortcut key. In response to the operation on the preset shortcut key, based on a location of an input focus in an input box, the electronic device 100 may determine a query statement (for example, one or more sentences of text before the input focus) and perform searching.

In a possible implementation, the electronic device 100 may search a file inserted before the preset symbol is detected for content that matches the semantics of the query statement. It can be learned from FIG. 6A to FIG. 6C that, before detecting the preset symbol 615E shown in FIG. 6B, the electronic device 100 inserts the file named "Annual performance" into the email. The semantics of the query statement (that is, the text 615D) is the growth of the biodegradable cleaning products in Q1 in the file named "Annual performance". When detecting the preset symbol 615E shown in FIG. 6B, the electronic device 100 may preferentially search the file named "Annual performance" for content that matches the semantics of the text 615D, to find the search result 618 and the search result 619 shown in FIG. 6B.

In other words, the electronic device 100 may narrow down a search range based on context information of the query statement. This can improve information search efficiency and reduce information search power consumption. The electronic device 100 may more quickly find information to be searched for by the query statement.

It can be learned from the scenarios shown in FIG. 6A to FIG. 6C that an information search capability provided by the foregoing global search application may be further invoked by another app. After inputting, in a text editing scenario, a text that can be used as a query statement, the user may invoke, by inputting a preset symbol or performing another preset operation, the information search capability provided by the global search application, to quickly insert information that the user wants to search for into a text editing box. The foregoing embodiment can help the user quickly obtain information that the user wants to search for, and improve user experience of text editing.

**FIG.** 7A **to FIG. 7G** **are diagrams of examples of some other information search scenarios.**

As shown in FIG. 7A, an electronic device 100 may display a user interface 710. The user interface 710 may be an interface of a text editing application, for example, an interface of a memo application. The user interface 710 may include a text 711 that is input by a user. For example, content of the text 711 may be "The screen resolution of the new mobile phone being developed is:". The electronic device 100 may display a query control 712 shown in FIG. 7A at the end of the text that is input by the user. In response to an operation on the query control 712 shown in FIG. 7A, for example, a tap operation, the electronic device 100 may determine, as a query statement for searching, a part or all of the text that is input before the query control 712. For a method for determining a query statement by the electronic device 100 in response to the operation on the query control 712, refer to the method for determining a query statement by the electronic device 100 after the preset symbol 615B is detected in FIG. 6A. Details are not described herein again.

Herein, an example in which the electronic device 100 determines, as a query statement, the text 711 that is input before the query control 712 is used for description. The electronic device 100 may perform searching based on the text 711.

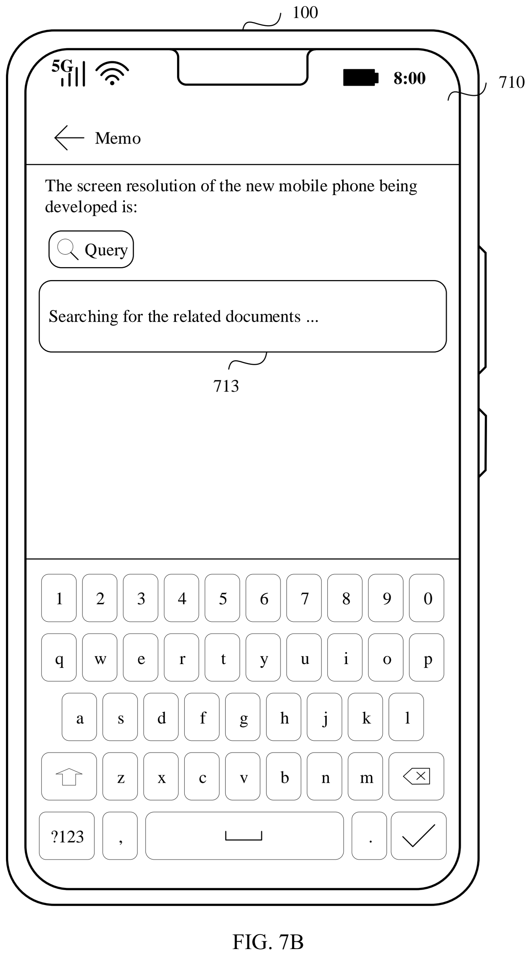

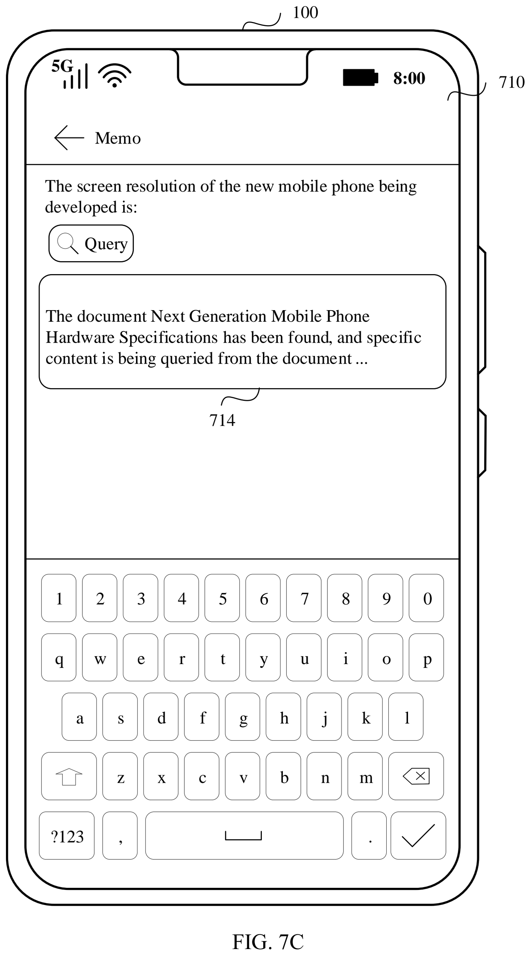

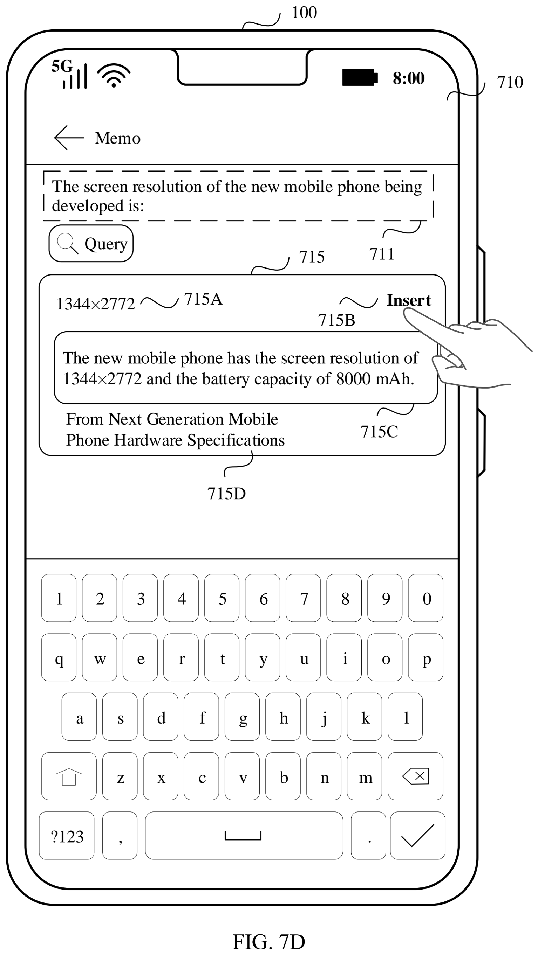

In some embodiments, the electronic device 100 may display a prompt box 713 shown in FIG. 7B in a search process. The prompt box 713 may include prompt content "Searching for the related documents", to prompt the user that the electronic device 100 is searching. Further, when a file including information to be searched for by a query statement (that is, the text 711) is found, the electronic device 100 may display a prompt box 714 shown in FIG. 7C. The prompt box 714 may include prompt content "The document Next Generation Mobile Phone Hardware Specifications has been found, and specific content is being queried from the document", to prompt the user that a related file has been found and the information to be searched for by the query statement is being extracted from the related file. For example, the document Next Generation Mobile Phone Hardware Specification mentioned in the foregoing prompt content may be a file that is found by the electronic device 100 and that includes the information to be searched for by the query statement (that is, the text 711). When the information to be searched for by the query statement is extracted from the related file, the electronic device 100 may display a search result 715D shown in FIG. 7D.

As shown in FIG. 7D, the search result 715D may include a resolution 715A, an insertion control 715B, file content 715C, and a search result source 715D. The resolution 715A may indicate a screen resolution of a new mobile phone found by the electronic device 100. The insertion control 715B may be configured to insert the resolution 715A after the text 711. The file content 715C may include contextual content of the resolution 715A. The search result source 715D may indicate a source of the resolution 715A. For example, the search result source 715D is "From Next Generation Mobile Phone Hardware Specification" shown in FIG. 7D, which may indicate that the resolution 715A is found from the document Next Generation Mobile Phone Hardware Specification. The file content 715C and the search result source 715D may help the user determine whether the resolution 715A searched for and extracted by the electronic device 100 is a mobile phone screen resolution that the user wants to search for.

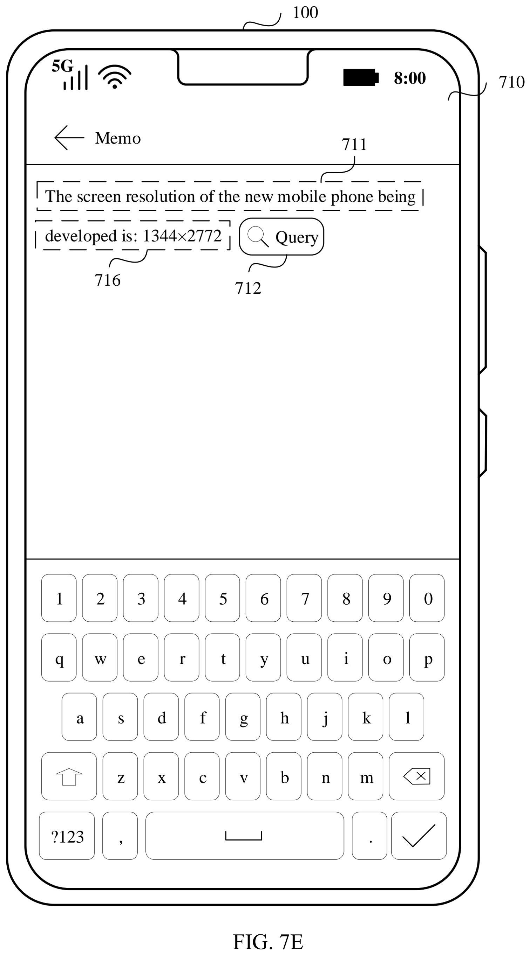

In response to an operation on the insertion control 715B shown in FIG. 7D, for example, a tap operation, the electronic device 100 may display a user interface 710 shown in FIG. 7E.

As shown in FIG. 7E, the electronic device 100 inserts a text 716 after the text 711, and displays a query control 712 after the text 716. The text 716 is the resolution 715A shown in FIG. 7D.

The prompt box 713 shown in FIG. 7B and the prompt box 714 shown in FIG. 7C are optional. In some embodiments, in response to an operation on the query control 712 shown in FIG. 7A, the electronic device 100 may directly display the search result 715 shown in FIG. 7D after finding the information to be searched for by the query statement, and does not need to display the prompt box 713 shown in FIG. 7B and the prompt box 714 shown in FIG. 7C.

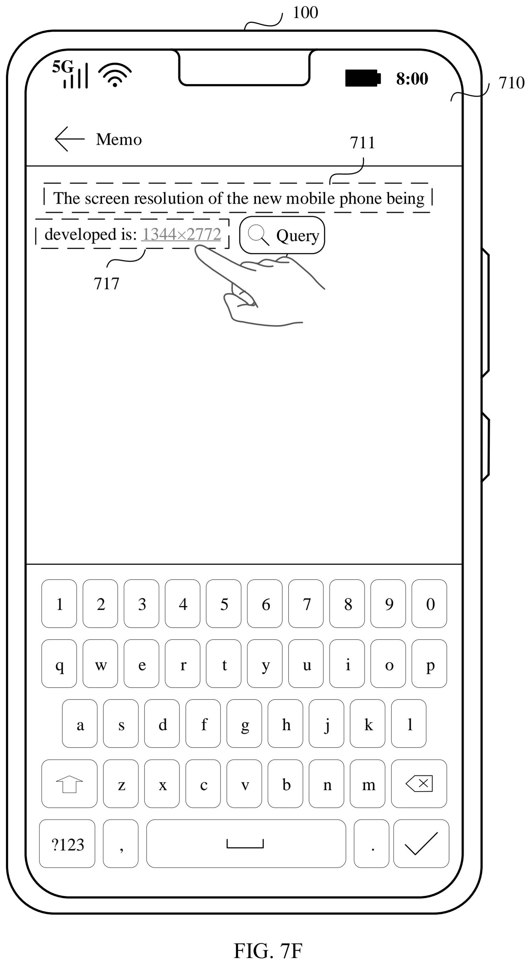

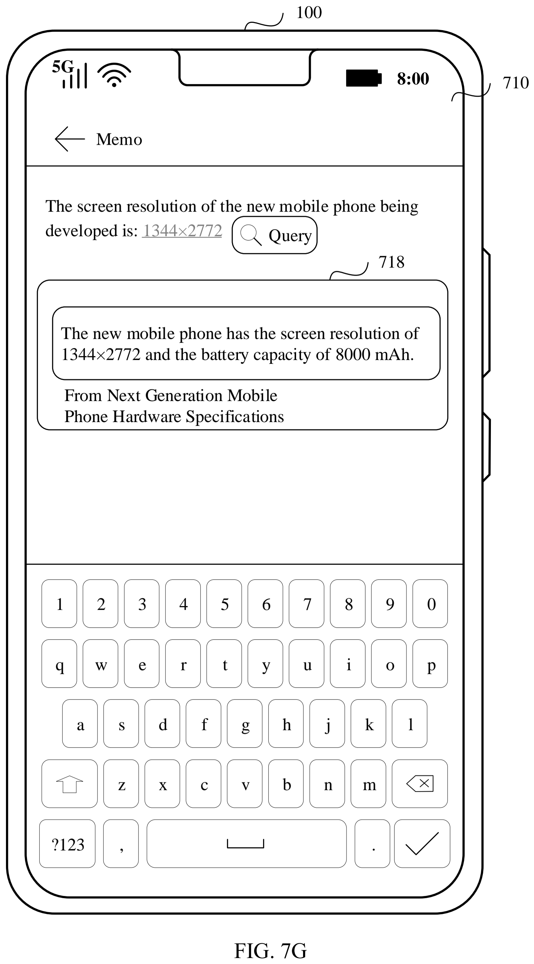

In some embodiments, in response to an operation on the insertion control 715B shown in FIG. 7D, the electronic device 100 may also insert a text 717 shown in FIG. 7F after the text 711. A display style of the text 717 may prompt the user that the text 717 supports user interaction. The display style of the text 717 may include: a color of the text 717 that is different from a color of the text 711, an underscore of the text 717, and the like. The display style of the text 717 is not limited in embodiments of this application. For example, in response to an operation of tapping the text 717, the electronic device 100 may display a prompt box 718 shown in FIG. 7G. The prompt box 718 may be used to display a source of the inserted text 717. For content in the prompt box 718, refer to the file content 715C and the search result source 715D shown in FIG. 7D. In response to an operation of tapping the text 717 again or an operation of tapping a blank area of the user interface 710, the electronic device 100 may further collapse the prompt box 718. An operation of collapsing the prompt box 718 is not limited in embodiments of this application.

In some embodiments, the query control 712 may be provided by the electronic device 100 in response to a preset operation. For example, when an operation on the preset shortcut key is detected, or in response to an operation of inputting the preset symbols shown in FIG. 6A to FIG. 6C, the electronic device 100 may display the query control 712 shown in FIG. 7A. The electronic device 100 may cancel display of the query control 712 after detecting an operation (for example, a tap operation) on the query control 712. In other words, the user interfaces shown in FIG. 7B to FIG. 7G may not include the query control. The foregoing operation of invoking the query control 712 is not limited in embodiments of this application.

It can be learned from the scenarios shown in FIG. 7A to FIG. 7E that an information search capability provided by the foregoing global search application may be further invoked by another app. The electronic device 100 may provide a query control (referring to the query control 712B shown in FIG. 7A) in a text editing scenario, so that the user quickly searches for a text that is input before the query control. The foregoing embodiment can help the user quickly obtain information that the user wants to search for, and improve user experience of text editing.

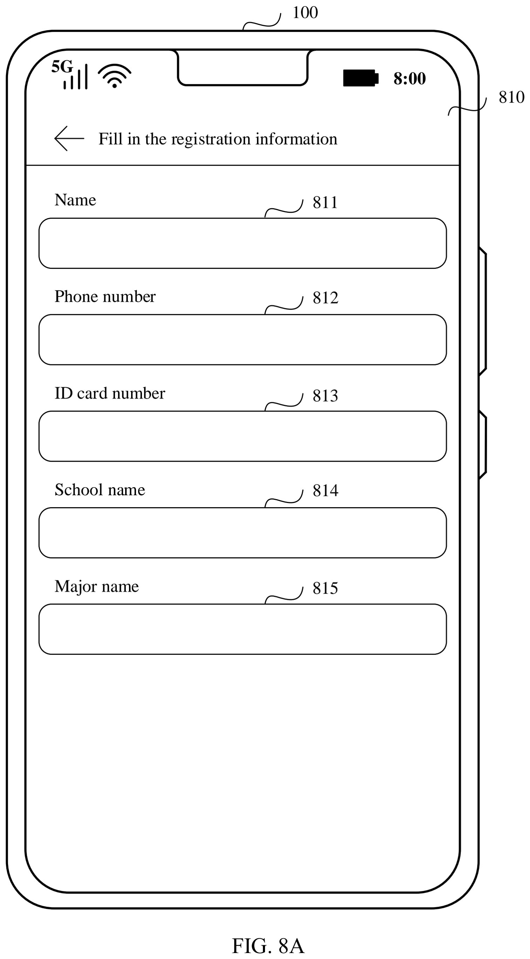

**FIG. 8A to FIG. 8E** **are diagrams of examples of some other information search scenarios.**

As shown in FIG. 8A, an electronic device 100 may display a user interface 810. The user interface 810 may be an information entry interface (for example, a registration information filling interface). The user interface 810 may include a plurality of input boxes: a name input box 811, a phone number input box 812, an ID card number input box 813, a school input box 814, and a major input box 815. The name input box 811 may be used to input a user name. The phone number input box 812 may be used to input a phone number. The ID card number input box 813 may be used to input an ID card number. The school input box 814 may be used to input a school name. The major input box 815 may be used to input a major name.

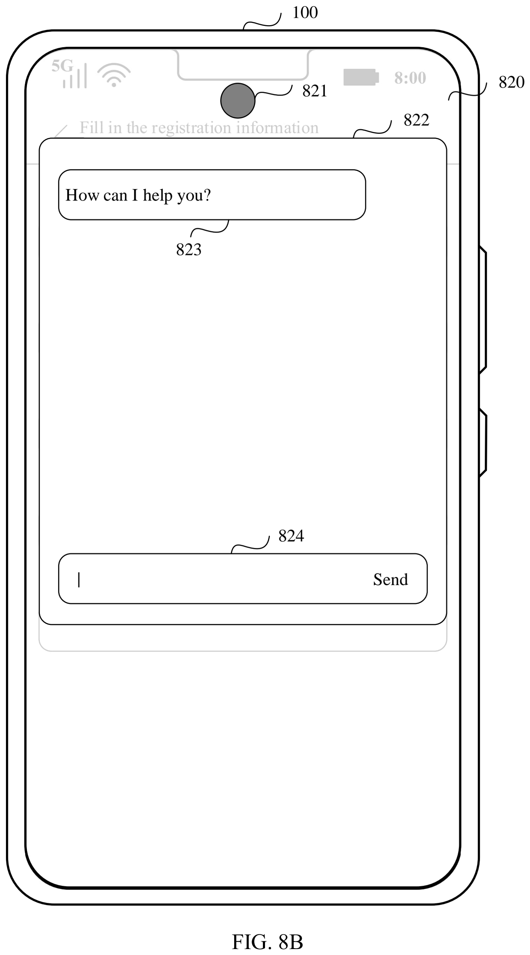

In some embodiments, when detecting an operation of waking up a voice assistant, the electronic device 100 may display a user interface 820 shown in FIG. 8B. The user interface 820 may be an interface on which a user talks with the electronic device 100 by using the voice assistant, to instruct the electronic device 100 to execute a corresponding voice instruction. The foregoing operation of waking up the voice assistant may be, for example, an operation of waking up by using a wakeup word, or an operation of pressing a preset button. The operation of waking up the voice assistant is not limited in embodiments of this application. The voice assistant may be an application that enables a user to interact with the electronic device 100 in natural language and control the electronic device 100 to execute a voice instruction by using technical means such as voice recognition, voice synthesis, and semantic analysis. The voice assistant may also be referred to as another name, for example, a smart assistant or a shortcut instruction.

Alternatively, the user interface 820 may be a user interface of an artificial intelligence chat application. The artificial intelligence chat application may be an app that uses an artificial intelligence model such as a language model to understand and generate natural language. Based on the artificial intelligence chat application, the electronic device 100 may provide a corresponding feedback in response to a user input. The user input may include but is not limited to: content manually that is input by the user by using an input keyboard, a voice instruction spoken by the user, and the like. The feedback provided by the electronic device 100 may include but is not limited to: querying and providing information related to the user input, executing a corresponding task based on the user input, and the like. The artificial intelligence chat application may also be referred to as a virtual assistant, a personal assistant, or the like.

An application to which the user interface 820 belongs is merely an example for description of this application. An operation manner of triggering the electronic device 100 to display the user interface 820 is not limited in embodiments of this application.

As shown in FIG. 8B, the user interface 820 may include a dialog box 822. The dialog box 822 may include information 823. The information 823 may instruct the user to input a user requirement to the electronic device 100. For example, content of the information 823 may include "How can I help you?" The dialog box 822 may further include an input box 824. The input box 824 may be used by the user for an input, so that the user questions or delivers an instruction to the electronic device 100. In some embodiments, in addition to displaying the information 823 on a screen, the electronic device 100 may further broadcast the content of the information 823 by voice.

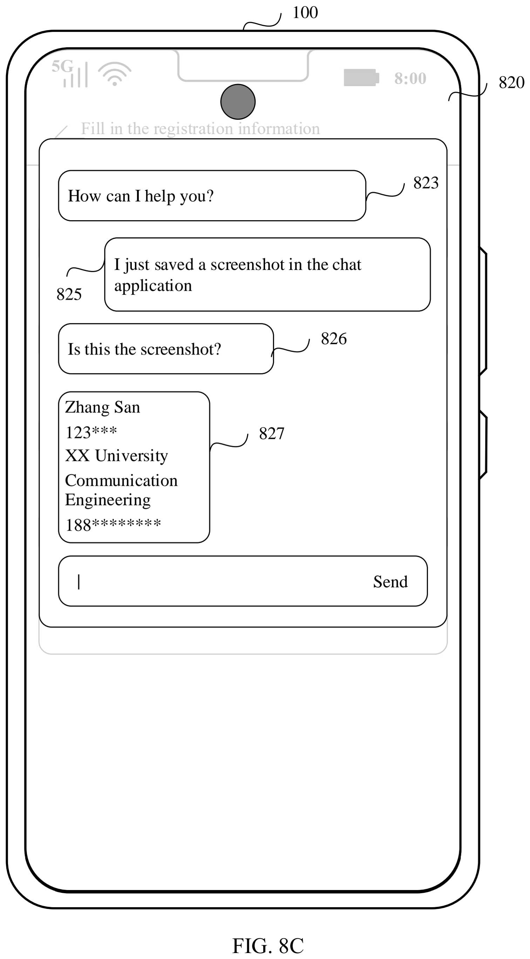

As shown in FIG. 8C, the electronic device 100 may receive a user input, and display information 825 in the dialog box 822 based on the user input. The information 825 may be input by the user by voice, or may be manually input by the user by using the input keyboard. A method for inputting the information 825 is not limited in embodiments of this application. For example, content of the information 825 may be "I just saved a screenshot in the chat application". The electronic device 100 may search a gallery application based on the information 825 for a screenshot recently saved in the chat application, and display information 826 and a picture 827 shown in FIG. 8C. The information 826 may prompt the user to confirm whether a picture found by the electronic device 100 is a picture that the user wants to search for. For example, content of the information 826 may be "Is this the screenshot?". The picture 827 may be a picture found by the electronic device 100 based on the information 825.

As shown in FIG. 8D, the user may input information 824A in the input box 824, and send the information 824A to the dialog box 822 by using a sending control in the input box 824. For example, content of the information 824A may be "Yes, help me fill the information in the picture in the registration form". It can be learned that the information 824A includes an instruction instructing the electronic device 100 to recognize information in the picture 827 and fill the information in the registration form.

When the electronic device 100 sends the information 824A to the dialog box 822, the electronic device 100 may recognize the information 824A, and determine, based on a recognition result, that a picture indicated in the information 824A is the picture 827 shown in FIG. 8D, and a registration form is a registration form in the user interface 810 shown in FIG. 8A.

In a possible implementation, the electronic device 100 may obtain descriptive information of each input box in the registration form. Descriptive information of one input box may indicate information about to-be-entered content in the input box. The descriptive information of the input box may be obtained by the electronic device 100 based on code written on a page on which the registration form is located, or may be obtained by the electronic device 100 by performing image recognition on a picture of the registration form. A method for obtaining descriptive information of an input box by the electronic device 100 is not limited in this application.

For example, the electronic device 100 may obtain the following: descriptive information of the input box 811 shown in FIG. 8A includes "Name", descriptive information of the input box 812 includes "Phone number", descriptive information of the input box 813 includes "ID card number", descriptive information of the input box 814 includes "School name", and descriptive information of the input box 815 includes "Major name".

Further, the electronic device 100 may determine the descriptive information of each input box in the registration form as a query statement, and search for corresponding information from the picture 827 based on semantics of the query statement, to fill the found information in an input box associated with the query statement.

For example, the electronic device 100 may determine the descriptive information (that is, "Name") of the input box 811 as a query statement. The electronic device 100 may query the picture 827 for information whose content is "Name", to obtain a text "Zhang San". The electronic device 100 may fill the text "Zhang San" in the input box 811. For another example, the electronic device 100 may determine the descriptive information (that is, "Phone number") of the input box 812 as a query statement. The electronic device 100 may query the picture 827 for information whose content is "Phone number", to obtain a text "188********". The electronic device 100 may fill the text "188********" in the input box 812. The electronic device 100 determines descriptive information of another input box in the user interface 810 shown in FIG. 8A as a query statement. For a process of searching for information in the picture 827, refer to the foregoing descriptions of the input box 811 and the input box 812. Details are not described herein again.

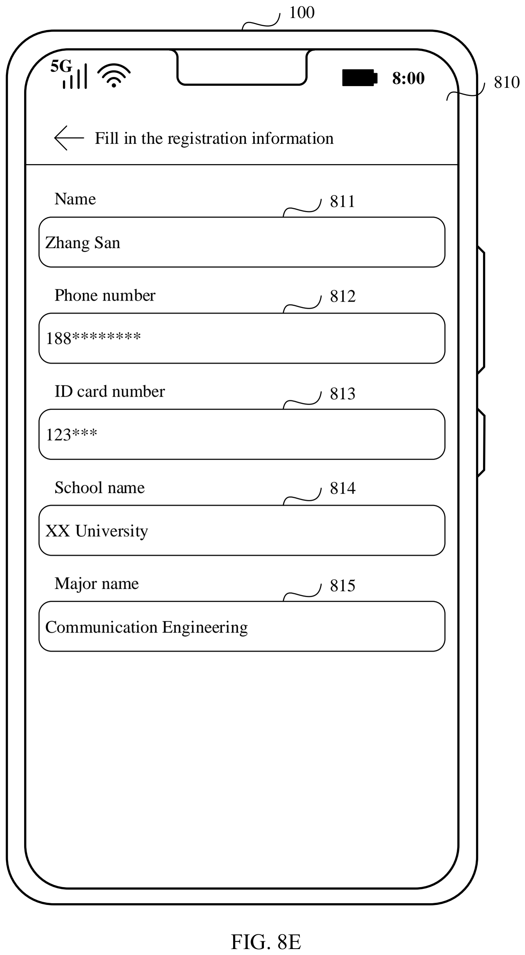

As shown in FIG. 8E, the electronic device 100 may extract a name (that is, "Zhang San"), a phone number (that is, "188********"), an ID card number (that is, "123***"), a school name (that is, "XX University"), and a major name (that is, "Communication Engineering") from the picture 827 shown in FIG. 8D based on the descriptive information of each input box in the registration form shown in the user interface 810. The electronic device 100 may separately fill the extracted information in corresponding input boxes. It can be learned that, even if a plurality of pieces of information in a picture are not convenient to be directly copied and pasted, the foregoing embodiment may also help the user instruct the electronic device 100 to extract the plurality of pieces of information and fill the plurality of pieces of information in corresponding target areas. The user may not need to manually perform a plurality of text recognition and copy operations on the picture and then repeatedly switch between an image display interface and a registration display interface to sequentially paste the plurality of pieces of information in the input boxes.

Not limited to searching for information in the foregoing picture and filling the information in a target area, the electronic device 100 may further search for information in a file of a type such as a text file or a table file and fill the information in a target area.

It can be learned from the scenarios shown in FIG. 8A to FIG. 8E that, with reference to the voice assistant and/or the language model, the electronic device 100 may recognize a user instruction, extract information from a specified file, and fill the information in a target area. In this way, when the information in the specified file needs to be filled in the target area, the user may directly deliver a search and filling instruction to the electronic device 100 without manual copying and pasting. The foregoing method simplifies operations of searching for, obtaining, and filling information by the user, and improves efficiency of obtaining information by the user.

It should be noted that the foregoing information search scenarios show examples of some information search entries provided in this application, for example, the search box 311 shown in FIG. 3A and FIG. 3B, the search control 412A shown in FIG. 4A, the preset symbol 615B shown in FIG. 6A, the query control 712 shown in FIG. 7A, and the dialog box 822 shown in FIG. 8B to FIG. 8D. Not limited to the foregoing information search entries, the electronic device 100 may further provide more information search entries for the user to quickly search for and obtain desired information.

The following describes an information search method provided in this application with reference to the foregoing information search scenarios.

The information search method provided in this application is implemented based on a semantic vector database. In some embodiments, the electronic device 100 may store the semantic vector database. The semantic vector database may store a semantic vector associated with a local file and/or a cloud file of the electronic device 100. One file may be associated with one or more semantic vectors.

A method for establishing a semantic vector database is described first before the information search method.

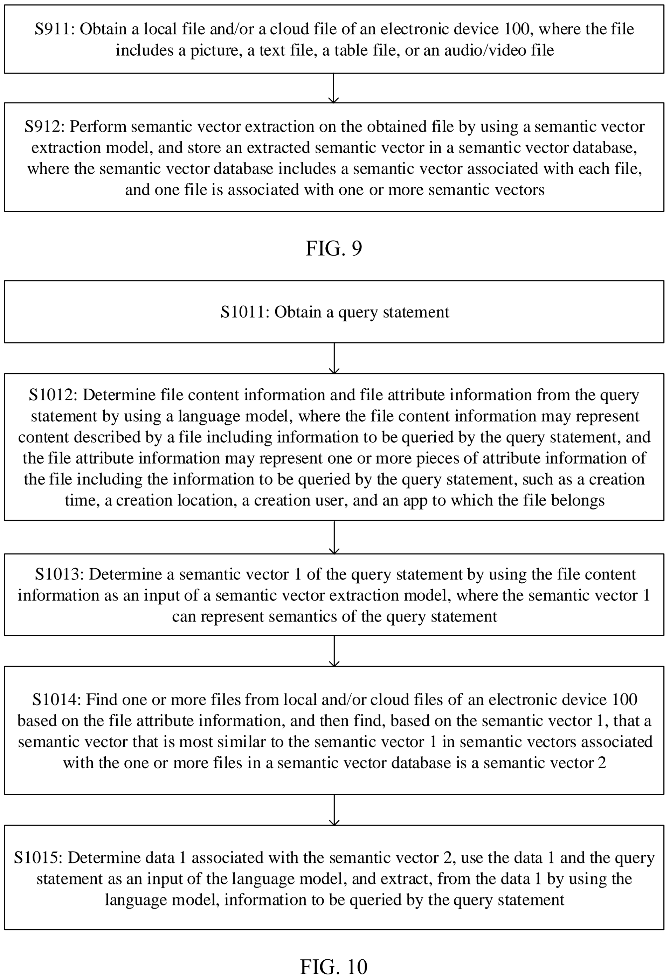

**FIG. 9** **is a flowchart of an example of a method for establishing a semantic vector database by an electronic device 100.**

S911: Obtain a local file and/or a cloud file of the electronic device 100, where the file includes a picture, a text file, a table file, an audio/video file, or the like.

The text file may represent a file whose file content includes a text. The table file may represent a file whose file content includes a table. The audio/video file may include an audio file and a video file. A type of the file obtained by the electronic device 100 is not limited in this application.

S912: Perform semantic vector extraction on the obtained file by using a semantic vector extraction model, and store an extracted semantic vector in a semantic vector database, where the semantic vector database includes a semantic vector associated with each file, and one file is associated with one or more semantic vectors.

The semantic vector extraction model may be used to extract a semantic vector of given content. The given content may include but is not limited to data of a type such as a text, a table, or a picture. The semantic vector extraction model may be a neural-network based model. An implementation of the semantic vector extraction model is not limited in embodiments of this application. The electronic device 100 inputs a segment of content in the semantic vector extraction model, and may obtain a semantic vector of the segment of content by using the semantic vector extraction model. The semantic vector of the segment of content may represent semantics of the segment of content. For example, the semantics of the segment of content may include an overview of information described by the segment of content (a subject or a topic of the segment of content).

For example, the electronic device 100 inputs an introduction text of a cat in the semantic vector extraction model, to obtain a semantic vector of the text that may indicate that the text is a cat introduction text. The electronic device 100 inputs, in the semantic vector extraction model, a figure photo taken in an amusement park, to obtain a semantic vector of the photo that may indicate that the photo is the figure photo of the amusement park. The electronic device 100 inputs an ID card photo of Zhang San in the semantic vector extraction model, to obtain a semantic vector of the ID card photo that may indicate that the photo is the ID card photo of Zhang San.

In some embodiments, one file may include a plurality of pieces of content (or referred to as a plurality of data segments). The electronic device 100 may split content in one file, and determine a semantic vector associated with each data segment after the splitting. In this way, one file may be associated with a plurality of semantic vectors. For example, one text file may include a plurality of paragraphs of text. The electronic device 100 may split the text file into paragraphs, and extract, by using the semantic vector extraction model, a semantic vector associated with each paragraph. Alternatively, one text file may include a plurality of chapters. The electronic device 100 may split the text file into chapters, and extract, by using the semantic vector extraction model, a semantic vector associated with each chapter. For another example, one table file may include a plurality of rows of data. The electronic device 100 may split the table file by row, and extract, by using the semantic vector extraction model, a semantic vector associated with each row of data in the table file. For another example, one presentation document may include a plurality of pages of data. The electronic device 100 may split the presentation file by page, and extract, by using the semantic vector extraction model, a semantic vector associated with each page of data in the presentation document.

It may be understood that different paragraphs or different chapters in one text file may express different subjects. For example, in one text file, a first paragraph describes cat species, and a second paragraph describes cat life habits. Different rows of data in one table file may also express different information. For example, in one table file, a first row records sales of product 1, and a second row records sales of product 2. Different pages of content in one presentation document may also express different subjects. For example, in one presentation document, a first page describes a background of a solution, and a second page describes a specific implementation of the solution. After a file is split, a semantic vector of a data segment obtained after the splitting is extracted, so that the electronic device 100 can more accurately find, during information search, information that the user wants to search for.

A granularity of splitting a file is not limited in embodiments of this application. For example, the granularity of splitting a file may include but is not limited to: a sentence by text, a paragraph by text, a chapter by text, a page by file, a row by table, and a column by table.

Optionally, the electronic device 100 may alternatively use a file as a whole, and extract, by using the semantic vector extraction model, a semantic vector associated with the file. In other words, one file may be associated with one semantic vector.

In some embodiments, the semantic vector database may alternatively be established by a cloud server. After establishing the semantic vector database, the cloud server may send the semantic vector database to the electronic device 100. Optionally, the semantic vector database may alternatively be stored in the cloud server.

In some embodiments, when a file locally stored in the electronic device 100 changes, or a file stored in a cloud storage space associated with the electronic device 100 changes, the electronic device 100 may update the foregoing semantic vector database. The foregoing file change may include but is not limited to: adding a file, changing content in a file, deleting an existing file, and the like.

**FIG. 10** **is a flowchart of an example of an information search method according to this application.**

As shown in FIG. 10, the information search method may include steps S1011 to S1015.

S1011: Obtain a query statement.

An electronic device 100 may obtain the query statement. The query statement may represent content instructing the electronic device 100 to perform searching. In some embodiments, the electronic device 100 may obtain the query statement based on content that is input in a search box. The search box may be, for example, a search box provided by a global search application. For details, refer to the scenarios shown in FIG. 3A to FIG. 3D. In some other embodiments, the electronic device 100 may obtain the query statement based on an operation that a user selects a segment of content and performs searching. For details, refer to the scenarios shown in FIG. 4A and FIG. 4B. In some other embodiments, the electronic device 100 may obtain the query statement based on a preset symbol detected in an input box or based on a detected operation on a shortcut key. For details, refer to the scenarios shown in FIG. 6A to FIG. 6C. In some other embodiments, the electronic device 100 may obtain the query statement based on an operation that is detected in an input box and that is performed on a query control. For details, refer to the scenarios shown in FIG. 7A to FIG. 7D. In some other embodiments, the electronic device 100 may obtain the query statement based on descriptive information of an input box in which information is to be filled. For details, refer to the scenarios shown in FIG. 8A to FIG. 8E. A method for obtaining the query statement by the electronic device 100 is not limited in embodiments of this application.

S1012: Determine file content information and file attribute information from the query statement by using a language model, where the file content information may represent content described by a file including information to be queried by the query statement, and the file attribute information may represent one or more pieces of attribute information of the file including the information to be queried by the query statement, such as a creation time, a creation location, a creation user, and an app to which the file belongs.

The language model may be an artificial intelligence (artificial intelligence, AI) model used for processing a language text (or a symbol system), and may be used to generate, based on a prompt (prompt), a text that meets a requirement, and ensure that an output result is related to the prompt. The language model may include a language model implemented based on probability theory and statistics (that is, a statistical language model), a language model implemented based on deep learning and a neural network (that is, a neural network language model), and the like. An implementation method of the language model is not limited in embodiments of this application. For example, the electronic device 100 may implement the information search method in this application by using a large language model (large language model, LLM). The LLM may be a neural network model, and may learn syntax and semantics of natural language, to generate a human-readable text. The LLM may be obtained through training by using a large-scale corpus. The corpus may include massive text data. The LLM can process various natural language processing tasks, such as natural language generation, text error correction, text classification, text summarization, machine translation, and speech recognition.

The foregoing prompt may be human-understandable natural language (that is, a hard prompt (hard prompt/discrete prompt)). For example, the prompt may be a text or a sentence consisting of natural language. Alternatively, the prompt may be machine-readable content, and belongs to non-natural language (that is, a soft prompt (soft prompt/continuous prompt)). For example, the soft prompt may be an embedding (embedding), converting a word into a meaning vector representation processed by a computer. The hard prompt is more explainable. The soft prompt may more flexibly eliminate a parameter limitation on the language model. The prompt may be used to start and guide the language model to generate an output of a specified type, subject, or format. For example, in the natural language processing field, the prompt may include a set of questions and answers or a task description. For example, the prompt is "Give three names to the pet" or "Translate this English sentence to French". For another example, the prompt may further include a question and answer example. The prompt to which the task description "Give three names to the pet" belongs may include the following question and answer examples: "Pet type: cat, pet name: name 1, name 2, and name 3"; and "Pet type: dog, pet name: name 4, name 5, and name 6". It may be understood that the question and answer example included in the prompt may instruct the language model to answer a question of the user in a question and answer example manner. The language model may generate, based on the prompt, a text that meets a requirement, and ensure that an output result is related to the prompt.

In some embodiments, the language model may be deployed in a cloud server. The electronic device 100 may send the query statement to the cloud server. Then, the cloud server may determine the file content information and the file attribute information from the query statement by using the language model. The cloud server may send the file content information and the file attribute information to the electronic device 100. In some other embodiments, the electronic device 100 may store the language model. When obtaining the query statement, the electronic device 100 may determine the file content information and the file attribute information from the query statement by using the language model.

The file content information determined based on the query statement may indicate a semantic limitation on information to be searched for by the query statement in the query statement. In other words, the file content information may be a condition that limits semantics or a meaning of a search result, and may be used by the electronic device 100 to search for, based on the semantics, the search result required by the query statement. The file attribute information determined based on the query statement may indicate an attribute limitation on information to be searched for by the query statement in the query statement. Content included in the file attribute information is not limited in embodiments of this application. For example, the file attribute information may include one or more of the following: a creation time, a creation location, a creation user, an app to which a file belongs, a modification time, a quantity of modifications, a file size, and a storage location. In other words, the file content information may be a condition that limits an attribute of a file to which a search result belongs, so that the electronic device 100 can search for, based on the attribute, the file to which the search result required by the query statement belongs, and therefore can extract the search result from the file.

The electronic device 100 may find a related file based on the file content information and the file attribute information that are determined based on the query statement, and extract, from the related file, content to be searched for by the query statement.

File content information of a file may be determined from content described by the file. File content information of a file can represent semantics of the file or a part of content in the file. File attribute information of a file may include one or more pieces of attribute information of the file, for example, a creation time, a creation location, a creation user, an app to which the file belongs, a modification time, a quantity of modifications, a file size, and a storage location. In some embodiments, the electronic device 100 may use a file system to obtain attribute information of each file. The file system may be a method and a data result that are used by an operating system to determine a file on a disk or a partition, and may be responsible for managing a file stored in the electronic device 100. When storing a file, in addition to storing actual content of the file (for example, text content recorded in a text file or pixel data included in a picture file), the file system further stores attribute information of the file. Optionally, the electronic device 100 may alternatively obtain attribute information of a file by using file data. In addition to actual content of a file, file data of the file stored in the electronic device 100 further includes descriptive information of the file. The descriptive information is attribute information of the file. When opening a file, the electronic device may read actual content of the file from file data and display the actual content on a screen. In file data of files in different formats, types of attribute information may be different. For example, file data of a picture file may include attribute information "resolution", but does not include attribute information "quantity of paragraphs"; and file data of a text file may include attribute information "quantity of paragraphs", but does not include attribute information "resolution". Optionally, the electronic device 100 may further obtain attribute information of a file from an application based on internal information of the application. When the application is authorized, the electronic device 100 may obtain the internal information of the application. For example, the electronic device 100 may access a chat record in a chat application, and determine who sends a file in the chat record, to determine attribute information "sender" of the file. A method for determining file attribute information of a file by the electronic device 100 is not limited in embodiments of this application.

It may be understood that file content information of a file may be viewed after the file is opened, and file attribute information of a file may be displayed in response to an operation of viewing a file attribute. The foregoing operation of viewing a file attribute may be, for example, an operation performed on an attribute control after a right mouse button is tapped when a cursor is placed at a location of a file shortcut.

In some embodiments, file attribute information of a file may not exist in content described by the file. For example, file content information corresponding to a photo of walking a dog by a river may include: river, person walking a dog, and dog. However, the photo of walking a dog by a river does not include a photo photographing time. A photographing application of the electronic device 100 records the photographing time of taking the photo of walking a dog by a river. Therefore, file attribute information corresponding to the photo may include the photographing time.

Herein, a method for determining file content information and file attribute information from a query statement by using the language model is described as an example.

An input of the language model may include a query statement, prompt1, and prompt2. prompt1 may instruct the language model to determine file content information from the query statement. For example, prompt1 may be as follows: Generalize given content, anonymize a specific time, location, person name, and file size, and keep given content as simple as possible while a meaning described by the given content is maintained. prompt2 may instruct the language model to determine file attribute information from the query statement. For example, prompt2 may be as follows: If given content includes a time, location, person name, file size, and file type, extract the information from the given content. The time, location, and person name that the language model is instructed to extract in prompt2 may respectively represent a creation time (or a photographing time, a sending time, or a receiving time), a creation location (or a photographing location), and a creation user (or a sender, or a receiver) of a file.

For example, the query statement is "technical document sent by Zhang San yesterday". The file content information that is output by the language model based on prompt1 may include: technical document. The file attribute information that is output by the language model based on prompt2 may include: Zhang San and yesterday. In this way, based on the file content information and the file attribute information, the electronic device 100 may search all local and/or cloud files of the electronic device 100 for files sent by a user named "Zhang San" yesterday, and find a file whose content is the technical document from the files sent by Zhang San yesterday. For another example, the query statement is "photo of walking a dog by a river in March last year". The file content information that is output by the language model based on prompt1 may include: walking a dog by a river in spring. The file attribute information that is output by the language model based on prompt2 may include: March last year and photo. In this way, based on the file content information and the file attribute information, the electronic device 100 may search all local and/or cloud pictures of the electronic device 100 for photos taken in March last year, and find a photo of walking a dog by a river in spring from the photos taken in March last year. A photographing time of the foregoing photo may be recorded by the electronic device 100 when the electronic device takes the photo. It can be learned that the word "March last year" in the query statement "photo of walking a dog by a river in March last year" may be used to limit a photographing date of the photo, and may also be used to limit a season presented by photo content. For example, if the photo content includes elements such as buds and flowers, it may indicate that the season presented by the photo content is spring. If the photo content includes an element such as a burning sun, it may indicate that the season presented by the photo content is summer. If the photo content includes elements such as deciduous yellow leaves, it may indicate that the season presented by the photo content is autumn. Therefore, the word "March last year" in the query statement may be used to determine the file content information (for example, "spring"), and may also be used to determine the file attribute information (for example, "March last year"). In other words, a word, a sentence, or a paragraph of text in the query statement may include both a limitation on the file attribute information and a limitation on the file content information. The language model may extract all possible limitations on file content and a file attribute from the query statement.

In some embodiments, the query statement may not have the file attribute information such as a time, a location, a person name, or a file size. The content obtained by using the language model may not include the file attribute information. When the query statement does not include the file attribute information, the electronic device 100 may also search for, based on the file content information, information to be searched for by the query statement.

For example, the query statement is "ID card number". The file content information that is output by the language model based on prompt1 may include: ID card number. Because the query statement does not include the file attribute information, the file attribute information that is output by the language model based on prompt2 may be empty.

In some other embodiments, the query statement may alternatively include only the file attribute information, but does not include the file content information. For example, the query statement is "photo sent by Zhang San". The file attribute information that is output by the language model based on prompt2 may include: Zhang San and photo. The file content information that is output by the language model based on prompt1 may be empty.

S1013: Determine a semantic vector 1 of the query statement by using the file content information as an input of a semantic vector extraction model, where the semantic vector 1 can represent semantics of the query statement.

For the semantic vector extraction model, refer to the descriptions of S912 shown in FIG. 9.

S1014: Find one or more files from local and/or cloud files of the electronic device 100 based on the file attribute information, and then find, based on the semantic vector 1, that a semantic vector that is most similar to the semantic vector 1 in semantic vectors associated with the one or more files in a semantic vector database is a semantic vector 2.

The file attribute information may indicate a file source. The electronic device 100 may search the local and/or cloud files of the electronic device 100 based on the file attribute information for a file indicated by the file attribute information. It can be learned from FIG. 9 that the electronic device 100 may store the semantic vector database. The semantic vector database may store the semantic vectors associated with the one or more files found by the electronic device 100.

Because one file may be associated with a plurality of semantic vectors, the electronic device 100 may calculate a vector similarity, and determine a semantic vector that is most similar to the semantic vector 1 in the semantic vectors associated with the one or more files found by the electronic device 100.

A method for calculating a vector similarity by the electronic device 100 is not limited in embodiments of this application. For example, the electronic device 100 may calculate a similarity between semantic vectors by using a method such as a cosine similarity, a Euclidean distance, or a Pearson correlation coefficient, to find a semantic vector that is most similar to the semantic vector 1.

In some embodiments, after calculating similarities between the semantic vector 1 and the semantic vectors associated with the one or more files, the electronic device 100 may first select a semantic vector whose similarity to the semantic vector 1 is greater than a similarity threshold. The electronic device 100 may determine one or more semantic vectors with a highest similarity in the semantic vectors whose similarities are higher than the similarity threshold as a semantic vector that is most similar to the semantic vector 1. The foregoing similarity threshold may be preset. The similarity threshold is not limited in this application. For example, when the cosine similarity is used for similarity calculation, the foregoing similarity threshold may be 0.8, 0.85, or the like.

If the similarities between the semantic vector 1 and the semantic vectors associated with the one or more files are all less than the similarity threshold, the electronic device 100 may prompt the user that no related information is found. It may be understood that, that the similarities between the semantic vector 1 and the semantic vectors associated with the one or more files are all less than the similarity threshold may indicate that none of the one or more files includes information to be searched for by the query statement.

Herein, an example in which the semantic vector 2 is a semantic vector that is most similar to the semantic vector 1 is used for description.

S1015: Determine data 1 associated with the semantic vector 2, use the data 1 and the query statement as an input of the language model, and extract, from the data 1 by using the language model, information to be queried by the query statement.

The data 1 may be a data segment in a file, or may be all data in a file.

In addition to the data 1 and the query statement, the input of the language model may further include prompt information prompt3. prompt3 may instruct the language model to extract, from an input 1, the information to be queried by the query statement. For example, prompt3 may be as follows: Answer a question of the query statement as authentic as possible based on the provided data 1, and if the answer is not in the provided data 1, answer "I do not know". The foregoing content of prompt3 is merely an example for description of this application, and should not constitute a limitation on this application.

In some embodiments, the electronic device 100 may display, on the screen for use by the user, the information that is to be queried by the query statement and that is extracted from the data 1. Optionally, the electronic device 100 may further determine a purpose of the information to be queried by the query statement, and provide a corresponding function control on the screen, so that the user can more conveniently use the information to be queried by the query statement.

If an output of the language model is "I do not know", the electronic device 100 may prompt the user that no related information is found.

It should be noted that step S1012 is optional. When obtaining the query statement, the electronic device 100 may use the query statement as the input of the semantic vector extraction model, to obtain the semantic vector of the query statement, and then perform step S1014 and step S1015 to obtain the information to be queried by the query statement.

In step S1015, it is also optional to extract, from the input 1 by using the language model, the information to be queried by the query statement. For example, when the information to be queried by the query statement is the file, the electronic device 100 may provide the data 1 associated with the semantic vector 2 (the data 1 is the entire file) for the user after determining the data 1. In some embodiments, that the electronic device 100 provides the data 1 for the user may specifically indicate that the electronic device 100 provides the file for the user as an option (referring to the search result 616 and the search result 617 shown in FIG. 6A).

For example, the electronic device 100 may obtain the query statement "ID card number of Zhang San" shown in FIG. 3A. The file content information that is output by the language model based on prompt1 in step S1012 may include: ID card number. The file attribute information that is output by the language model based on prompt2 in step S1012 may include: Zhang San. In some embodiments, based on the foregoing file attribute information, the electronic device 100 may find a file including the text "Zhang San" by using a method such as an inverted index. The foregoing inverted index may be used to quickly obtain, based on the text, a list of files including the text. The file including the text "Zhang San" may include an ID card photo of Zhang San. The electronic device 100 may input the foregoing file content information in the semantic vector extraction model, to determine the semantic vector of the query statement. For example, a semantic vector of the query statement "ID card number of Zhang San" may indicate that semantics of the query statement is: ID card number. The electronic device 100 may search the semantic vector database for semantic vectors associated with the file including the text "Zhang San", and find a semantic vector that is most similar to the semantic vector of the query statement from these semantic vectors. For example, the semantic vector that is found by the electronic device 100 and that is most similar to the semantic vector of the query statement may be a semantic vector representing ID card information. The electronic device 100 may determine data associated with the most similar semantic vector, that is, the ID card photo of Zhang San. The electronic device 100 inputs the ID card photo of Zhang San and the query statement "ID card number of Zhang San" in the language model, and may extract the ID card number (referring to the ID card number 312A shown in FIG. 3A) from the ID card photo of Zhang San by using the language model.

For another example, the electronic device 100 may obtain the query statement "latest leukocyte count of Li Si" shown in FIG. 5A, and the file content information that is input by the language model based on prompt1 in step S1012 may include: leukocyte count. The file attribute information that is input by the language model based on prompt2 in step S1012 may include: Li Si and latest. In some embodiments, based on the foregoing file attribute information, the electronic device 100 may find a file including the text "Li Si". The foregoing file including the text "Li Si" may include a medical examination report photo of Li Si, memo information recording a medical examination result of Li Si, and the like. The electronic device 100 may input the foregoing file content information in the semantic vector extraction model, to determine the semantic vector of the query statement. For example, a semantic vector of the query statement "latest leukocyte count of Li Si" may indicate that semantics of the query statement is: leukocyte count. The electronic device 100 may search the semantic vector database for semantic vectors associated with the file including the text "Li Si", and find a semantic vector that is most similar to the semantic vector of the query statement from these semantic vectors. For example, the semantic vector that is found by the electronic device 100 and that is most similar to the query statement may include a semantic vector indicating medical examination information. The electronic device 100 may determine data associated with the most similar semantic vector, that is, the medical examination report photo of Li Si and the memo information recording the medical examination result of Li Si. The electronic device 100 inputs the medical examination report photo of Li Si and the query statement "latest leukocyte count of Li Si" in the language model, and may extract the leukocyte count (referring to the leukocyte count 523A shown in FIG. 5B) from the medical examination report photo of Li Si by using the language model. In addition, the electronic device 100 further inputs the memo information recording the medical examination result of Li Si and the query statement "latest leukocyte count of Li Si" in the language model, and may extract the leukocyte count (referring to the leukocyte count 524A shown in FIG. 5B) from the memo information by using the language model. In this way, the electronic device 100 may provide a plurality of search results found based on the query statement.

For another example, the electronic device 100 may obtain the query statement "AA bank card number" shown in FIG. 3B. The file content information that is input by the language model based on prompt1 in step S1012 may include: AA bank card number. The file attribute information that is input by the language model based on prompt2 in step S1012 may be empty. The electronic device 100 may input the foregoing file content information in the semantic vector extraction model, to determine the semantic vector of the query statement. For example, a semantic vector of the query statement "AA bank card number" may indicate that semantics of the query statement is: AA bank card number. The electronic device 100 may search the semantic vector database for a semantic vector that is most similar to the semantic vector of the query statement. For example, the semantic vector that is found by the electronic device 100 and that is most similar to the query statement may be a semantic vector indicating AA bank card information. The electronic device 100 may determine data associated with the most similar semantic vector, that is, an AA bank card photo. The electronic device 100 inputs the AA bank card photo and the query statement "AA bank card number" in the language model, and may extract the bank card number (referring to the bank card number 322A shown in FIG. 3B) from the AA bank card photo by using the language model.

For another example, the electronic device 100 may obtain the query statement "annual performance attachment" shown in FIG. 6A, and the file content information that is input by the language model based on prompt1 in step S1012 may include: annual performance attachment. The file attribute information that is input by the language model based on prompt2 in step S1012 may be empty. The electronic device 100 may input the foregoing file content information in the semantic vector extraction model, to determine the semantic vector of the query statement. For example, a semantic vector of the query statement "annual performance attachment" may indicate that semantics of the query statement is: file recording annual performance. The electronic device 100 may search the semantic vector database for a semantic vector that is most similar to the semantic vector of the query statement. For example, the semantic vector that is found by the electronic device 100 and that is most similar to the query statement may be a semantic vector indicating annual performance information. The electronic device 100 may determine data associated with the most similar semantic vector, that is, a file named "Annual performance" and a file named "2019 Annual performance. The electronic device 100 may provide the foregoing found files for the user (referring to the search result 616 and the search result 617 shown in FIG. 6A) as options.

For an information search process of another query statement mentioned in the foregoing information search scenarios in this application, refer to the foregoing example descriptions. Details are not described herein again.

It can be learned from the method shown in FIG. 10 that the user may input a query statement in the electronic device 100 to quickly query and obtain information that the user wants to query. The electronic device 100 may extract, from a local file and/or a cloud file of the electronic device 100 based on semantics of the query statement for use by the user, information that the user wants to search for. In this way, the user can obtain, through one search operation, the information that the user wants to search for, and does not need to open a corresponding file after the search and then manually extract, from the file, the information required by the user. The foregoing method simplifies operations of searching for and obtaining information by the user, and improves efficiency of obtaining information by the user.

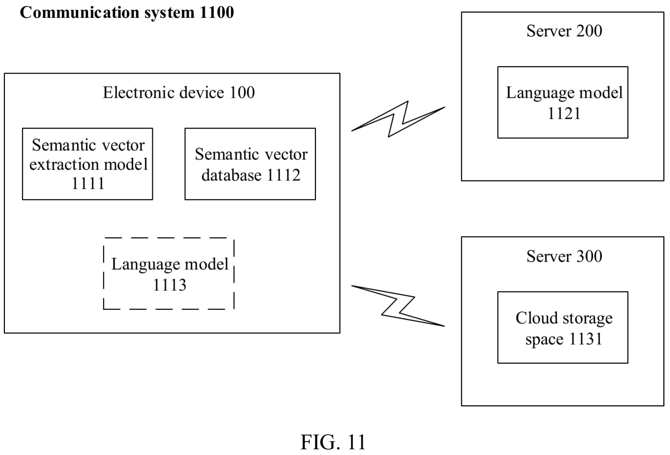

**FIG. 11** **is a diagram of an example of an architecture of a communication system 1100 according to an embodiment of this application.**

As shown in FIG. 11, the communication system 1100 may include an electronic device 100, a server 200, and a server 300.

The electronic device 100 may include a semantic vector extraction model 1111, a semantic vector database 1112, and a language model 1113. The semantic vector extraction model 1111 may be configured to extract a semantic vector of given content from the given content. For example, the electronic device 100 may extract, by using the semantic vector extraction model 1111, one or more semantic vectors associated with one file. For another example, the electronic device 100 may extract a semantic vector of a query statement by using the semantic vector extraction model 1111. The semantic vector database 1112 may store a semantic vector associated with a file stored locally and/or in a cloud of the electronic device 100. The language model 1113 may be configured to generate, based on a prompt, a text that meets a requirement. For both the semantic vector extraction model 1111 and the language model 1113, refer to the descriptions in the foregoing embodiments.

The server 300 may include a cloud storage space 1131. The cloud storage space 1131 may be a cloud storage space associated with the electronic device 100. For example, a device account is logged in to the electronic device 100. The cloud storage space 1131 may be a cloud storage space of the device account logged in to the electronic device 100. For another example, a cloud disk application account is logged in to a cloud disk application of the electronic device 100. The cloud storage space 1131 may be a cloud storage space of the cloud disk application account.

The electronic device 100 may communicate with the server 300 to obtain content stored in the cloud storage space 1131, to search the cloud storage space 1131 for information to be searched for by the query statement.

The server 200 may include a language model 1121. For the language model 1121, refer to the descriptions in the foregoing embodiments.

In some embodiments, the electronic device 100 may not include the language model 1113. After obtaining the query statement, the electronic device 100 may send the query statement to the server 200. The server 200 may determine file content information and file attribute information from the query statement by using the language model. In other words, step S1012 shown in FIG. 10 may be performed by the server 200. The server 200 may send the file content information and the file attribute information to the electronic device 100. The electronic device 100 may perform step S1013 and step S1014 shown in FIG. 10, to determine a semantic vector 2. Then, the electronic device 100 may determine data 1 associated with the semantic vector 2, and send the data 1 to the server 200. The server 200 may use the data 1 and the query statement as an input of the language model, and extract, from the data 1 by using the language model, information to be queried by the query statement. The server 200 may send, to the electronic device 100, the information to be queried by the query statement.

When the electronic device 100 includes the language model 1113, the electronic device 100 may perform, by using the language model 1113, step S1012 and step S1015 shown in FIG. 10 to extract the information to be queried by the query statement.

It may be understood that each user interface described in embodiments of this application is merely an example interface, and constitutes no limitation on the solutions of this application. In another embodiment, the user interfaces may use different interface layouts, may include more or fewer controls, and may add or reduce other function options, and provided that the user interfaces are based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. An information search method, wherein the method comprises:
receiving, by an electronic device, a first operation, wherein the first operation is used to search for first content;
displaying, by the electronic device, a first search result on a first page in response to the first operation, wherein the first search result is found based on the first content, and the first search result comprises first information extracted from a first file; and
displaying, by the electronic device on the first page, one or more first function controls configured to use the first information, wherein the one or more first function controls are related to a type of the first information.

2. The method according to claim 1, wherein the first operation comprises an operation of invoking a first search box in the electronic device and inputting the first content in the first search box; or
the first operation comprises an operation of selecting and searching for the first content; or
the first operation comprises an operation of inputting a first symbol at a first location associated with the first content; or
the first operation comprises an operation on a query control associated with the first content.

3. The method according to claim 1 or 2, wherein the first search result further comprises one or more of the following: a name of the first file, an application to which the first file belongs, and content of the first information that is comprised in the first file.

4. The method according to any one of claims 1 to 3, wherein the method further comprises:
further displaying, by the electronic device, a second search result on the first page in response to the first operation, wherein the second search result is found based on the first content, and the second search result comprises second information extracted from a second file; and
displaying, by the electronic device on the first page, one or more second function controls configured to use the second information, wherein the one or more second function controls are related to a type of the second information.

5. The method according to any one of claims 1 to 4, wherein the one or more first function controls comprise a first copy control, and the first copy control is configured to copy the first information.

6. The method according to any one of claims 1 to 5, wherein
the type of the first information is a phone number, the one or more first function controls comprise a dial control, and the dial control is configured to dial a phone number corresponding to the first information;
the type of the first information is an address, the one or more first function controls comprise a navigation control, and the navigation control is configured to navigate to an address corresponding to the first information; or
the type of the first information is a bank card number, the one or more first function controls comprise a transfer control, and the transfer control is configured to perform transfer by using a bank card number corresponding to the first information.

7. The method according to any one of claims 1 to 6, wherein the first content is located on the first page, and the one or more first function controls comprise a first insertion control; and the method further comprises:
receiving, by the electronic device, an operation on the first insertion control, and inserting the first information into the first page.

8. The method according to any one of claims 1 to 7, wherein the method further comprises:
receiving, by the electronic device, a second operation, wherein the second operation is used to search for second content, and the second content is located on a second page;
displaying, by the electronic device, a third search result on the second page in response to the second operation, wherein the third search result is found based on the second content, and the third search result comprises a first option corresponding to a third file; and
inserting, by the electronic device, the third file into the second page in response to an operation on the first option.

9. The method according to claim 7, wherein the method further comprises:
receiving, by the electronic device, an operation on the inserted first information on the first page, and displaying a source of the first information, wherein the source of the first information comprises one or more of the following content: the name of the first file, the application to which the first file belongs, and the content of the first information that is comprised in the first file.

10. The method according to any one of claims 1 to 9, wherein the method further comprises:
receiving, by the electronic device, a first instruction of a user, wherein the first instruction instructs to extract information from a fourth file to fill in a third page, and the third page comprises a first input box; and
filling, by the electronic device, third information in the first input box according to the first instruction, wherein the third information is information that is extracted from the fourth file and that matches the first input box.

11. The method according to any one of claims 1 to 10, wherein before displaying, by the electronic device, the first search result, the method further comprises:
determining, by the electronic device, file content information and file attribute information based on the first content, wherein the file content information indicates a semantic limitation on information to be searched for by the first content in the first content, and the file attribute information indicates an attribute limitation on the information to be searched for by the first content in the first content;
determining, by the electronic device, a first semantic vector of the first content based on the file content information;
finding, by the electronic device, one or more files based on the file attribute information, and obtaining a semantic vector corresponding to the one or more files, wherein the one or more files comprise the first file;
calculating, by the electronic device, a similarity between the semantic vector corresponding to the one or more files and the first semantic vector, and selecting a second semantic vector corresponding to the first file through screening based on the similarity, wherein the second semantic vector is a semantic vector with a highest similarity in semantic vectors whose similarities to the first semantic vector are higher than a first threshold; and
extracting, by the electronic device, the first information from the first file based on the first content.

12. An electronic device, wherein the electronic device comprises a memory and a processor, the memory is configured to store a computer program, and the processor is configured to invoke the computer program, so that the electronic device performs the method according to any one of claims 1 to 11.

13. A computer-readable storage medium, comprising instructions, wherein when the instructions are run on an electronic device, the electronic device is enabled to perform the method according to any one of claims 1 to 11.

14. A computer program product, wherein the computer program product comprises computer instructions, and when the computer instructions are run on an electronic device, the electronic device is enabled to perform the method according to any one of claims 1 to 11.
